(19) Europäisches Patentamt / European Patent Office / Office européen des brevets

(11) **EP 2 979 151 B1**

(12) **EUROPEAN PATENT SPECIFICATION**

(45) Date of publication and mention
of the grant of the patent:
**06.05.2020 Bulletin 2020/19**

(21) Application number: **14708102.0**

(22) Date of filing: **31.01.2014**

(51) Int Cl.:
*G06F 1/16* *(2006.01)*     *G06F 3/01* *(2006.01)*

(86) International application number:
**PCT/JP2014/000536**

(87) International publication number:
**WO 2014/155924 (02.10.2014 Gazette 2014/40)**

(54) **DISPLAY CONTROL DEVICE, DISPLAY CONTROL METHOD, AND PROGRAM**

ANZEIGESTEUERUNGSVORRICHTUNG, ANZEIGESTEUERUNGSVERFAHREN UND PROGRAMM

DISPOSITIF, PROCÉDÉ ET PROGRAMME DE COMMANDE D'AFFICHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2013   JP 2013071908**

(43) Date of publication of application:
**03.02.2016 Bulletin 2016/05**

(73) Proprietor: **Sony Corporation
Tokyo 108-0075 (JP)**

(72) Inventors:
• **TSUKAHARA, Tsubasa
Tokyo 108-0075 (JP)**

• **YAMAMOTO, Kazuyuki
Tokyo 108-0075 (JP)**
• **IKEDA, Takuo
Tokyo 108-0075 (JP)**
• **IZUMIHARA, Atsushi
Tokyo 108-0075 (JP)**
• **KOGA, Yasuyuki
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(56) References cited:
**US-A1- 2012 005 624     US-A1- 2012 105 473**

**Description**

CROSS REFERENCE TO RELATED APPLICATIONS

This application claims the benefit of Japanese Priority Patent Application JP 2013-071908 filed March 29, 2013.

Technical Field

The present disclosure relates to a display control device, a display control method, and a program.

Background Art

Display devices such as head mounted displays (which may hereinafter be referred to as "HMDs") which are mounted on a user so that a display surface is positioned ahead of the user have been developed. The technology described in the following PTL 1 is exemplified as a technology related to an HMD. PTL 2 relates to improved user interface elements for use within a 3D scene.

Citation List

Patent Literature

PTL 1: JP 2011-249906A
PTL 2: US 2012/0005624 A1

Summary

Technical Problem

In the case of a display device such as an HMD which is mounted on a user so that a display surface is positioned ahead of the user, display objects such as icons are displayed on the display surface. However, when a display object is displayed constantly at a fixed position on the display surface, e.g., when a stationary icon is displayed on the display surface, there is a concern that the user may feel discomfort since the user's field of view is blocked.

It is desirable to provide a display control device, a display control method, and a program capable of decreasing the possibility of giving a user a feeling of discomfort.

Solution to Problem

According to an embodiment of the present disclosure, a device may include a display control unit configured to move a displayed object on a screen of a display device according to movement of the display device, wherein the displayed object is moved to a predetermined position on the screen without any user input after the displayed object has been moved.

According to an embodiment of the present disclosure, a method may include moving a displayed object on a screen of a display device according to movement of the display device, wherein the displayed object is moved to a predetermined position on the screen without any user input after the movement of the displayed object has been moved.

According to an embodiment of the present disclosure, a non-transitory computer-readable medium may be recorded with a computer program executable by a processor to implement a method that may include moving a displayed object on a screen of a display device according to movement of the display device, wherein the displayed object is moved to a predetermined position on the screen without any user input after the displayed object has been moved.

According to another embodiment of the present disclosure, a device may include display control circuitry configured to move a displayed object on a screen of a display device according to movement of the display device, wherein the displayed object is moved to a predetermined position on the screen without any user input after the displayed object has been moved.

According to an embodiment of the present disclosure, a device may include a display controller to move a displayed object on a screen of a display device according to movement of the display device, wherein the displayed object is moved to a predetermined position on the screen without any user input after the displayed object has been moved.

The following detailed description, and the embodiments disclosed therein, will allow a full understanding of the present invention. The scope of the invention is defined by the appended claims.

**Advantageous Effects of Invention**

According to an embodiment of the present disclosure, it is possible to decrease the possibility of giving a user a feeling of discomfort.

**Brief Description of Drawings**

[fig.1]FIG. 1 is an illustrative diagram showing an example of a display device according to an embodiment of the present disclosure.
[fig.2]FIG. 2 is an illustrative diagram illustrating a first example of a display control process according to the embodiment in a display control device according to an embodiment of the present disclosure.
[fig.3]FIG. 3 is an illustrative diagram illustrating the first example of a display control process according to the embodiment in a display control device according to an embodiment of the present disclosure.
[fig.4]FIG. 4 is an illustrative diagram illustrating the first example of a display control process according to the embodiment in a display control device according to an embodiment of the present disclosure.

[fig.5]FIG. 5 is an illustrative diagram illustrating a second example of a display control process according to the embodiment in a display control device according to an embodiment of the present disclosure.

[fig.6]FIG. 6 is an illustrative diagram illustrating a third example of a display control process according to the embodiment in a display control device according to an embodiment of the present disclosure.

[fig.7]FIG. 7 is an illustrative diagram illustrating the third example of a display control process according to the embodiment in a display control device according to an embodiment of the present disclosure.

[fig.8]FIG. 8 is an illustrative diagram illustrating the third example of a display control process according to the embodiment in a display control device according to an embodiment of the present disclosure.

[fig.9]FIG. 9 is an illustrative diagram illustrating the third example of a display control process according to the embodiment in a display control device according to an embodiment of the present disclosure.

[fig. 10] FIG. 10 is an illustrative diagram illustrating a fifth example of a display control process according to the embodiment in a display control device according to an embodiment of the present disclosure.

[fig.11]FIG. 11 is an illustrative diagram illustrating the fifth example of a display control process according to the embodiment in a display control device according to an embodiment of the present disclosure.

[fig.12]FIG. 12 is an illustrative diagram illustrating a sixth example of a display control process according to the embodiment in a display control device according to an embodiment of the present disclosure.

[fig.13]FIG. 13 is an illustrative diagram illustrating a seventh example of a display control process according to the embodiment in a display control device according to an embodiment of the present disclosure.

[fig.14]FIG. 14 is an illustrative diagram illustrating an eighth example of a display control process according to the embodiment in a display control device according to an embodiment of the present disclosure.

[fig.15]FIG. 15 is an illustrative diagram illustrating a ninth example of a display control process according to the embodiment in a display control device according to an embodiment of the present disclosure.

[fig.16]FIG. 16 is an illustrative diagram illustrating a tenth example of a display control process according to the embodiment in a display control device according to an embodiment of the present disclosure.

[fig.17]FIG. 17 is a block diagram showing an example of a configuration of the display control device according to an embodiment of the present disclosure.

sure.

[fig.18]FIG. 18 is an illustrative diagram showing an example of a hardware configuration of the display control device according to an embodiment of the present disclosure.

**Description of Embodiments**

Hereinafter, preferred embodiments of the present disclosure will be described in detail with reference to the appended drawings. Through this specification and the drawings, the same reference numerals are given to constituent elements having substantially the same functional configurations and the repeated description will be omitted.

Hereinafter, the description will be made in the following order.

1. Display control method according to embodiment
2. Display control apparatus according to embodiment
3. Program according to embodiment

(Display control method according to embodiment)

Before the configuration of a display control apparatus according to an embodiment is described, a display control method according to the present embodiment will first be described. Hereinafter, the display control method according to the present embodiment will be described exemplifying a case in which the display control apparatus according to the present embodiment performs a process relevant to the display control method according to the present embodiment.

<1> Example of display apparatus according to embodiment

First, an example of the configuration of a display apparatus according to the present embodiment controlled by the process relevant to the display control method according to the present embodiment and the display control apparatus according to the present embodiment will be described. The display control apparatus according to the present embodiment and the display apparatus according to the present embodiment may be, for example, separate apparatuses or may be an integrated apparatus. When the display control apparatus according to the present embodiment and the display apparatus according to the present embodiment are an integrated apparatus, the display control apparatus according to the present embodiment is configured to control the self-apparatus (the display control apparatus according to the present embodiment).

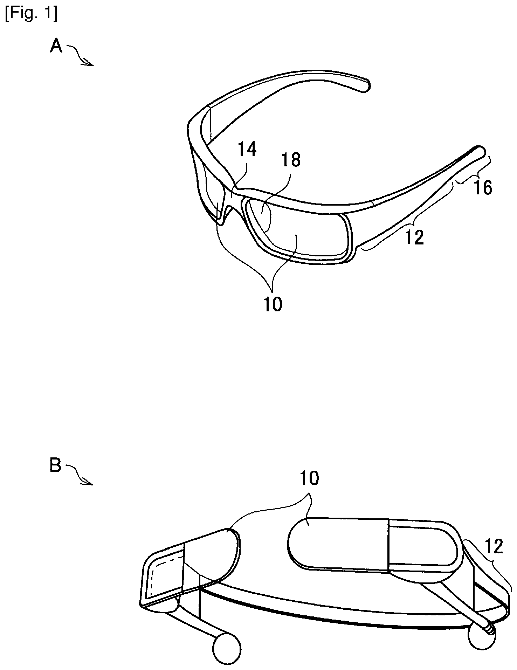

FIG. 1 is an explanatory diagram illustrating an example of the display apparatus according to the present embodiment. For example, the display apparatus according to the present embodiment is mounted on a user so that a display surface is located in front of the user. Here, A shown in FIG. 1 indicates an example of an HMD and B shown in FIG. 1 indicates another example of an HMD.

The display apparatus according to the present embodiment includes, for example, a display unit 10. As indicated by A of FIG. 1 and B of FIG. 1, for example, the display apparatus according to the present embodiment includes various members such as one or two or more temple members 12, one or two or more bridge members 14, one or two or more modern members 16, and one or two or more pad members 18.

In addition, the display device according to this embodiment may be provided with one or more sensors such as an acceleration sensor, a gyro sensor, and a geomagnetic sensor capable of detecting the movement of the display device according to this embodiment. The sensor capable of detecting the movement of the display device according to this embodiment is not limited to the above-described examples. Examples of the sensor capable of detecting the movement of the display device according to this embodiment include arbitrary sensors capable of detecting the movement of the display device according to this embodiment, such as an image sensor which analyzes a captured image obtained by capturing the image of a user on which the display device according to this embodiment is mounted and detects the movement of the display device according to this embodiment from the movement of the user.

When one or more external sensors capable of detecting the movement of the display device according to this embodiment are connected to the display device according to this embodiment, the display device according to this embodiment may not be provided with the sensor.

For example, the display unit 10 includes display surfaces that can display a display object and is disposed at a position in front of two eyes of the user so that the display surfaces are located in front of the user at the time of the mounting on the user. Here, in FIG. 1, the display unit 10 is configured to include the display surfaces corresponding to the two eyes of the user, but the configuration of the display unit according to the present embodiment is not limited to the foregoing configuration. For example, the display unit according to the present embodiment may be configured to include a display surface corresponding to only one eye of the user.

Here, examples of the display objects according to the present embodiment include icons corresponding to applications or the like, thumbnail images of still images or moving images, content images indicating still images or moving images, and images (still images or moving images) used to notify the user of a secondary display screen which displays web screens, and so on. Further, examples of the display objects according to the present embodiment may further include images (still images or moving images) relevant to a layout of a screen.

For example, when the display apparatus according to the present embodiment is mounted on the user, as indicated by A and B of FIG. 1, the display apparatus is configured so that the display surfaces are located in front of the user.

Of course, the outer appearance of the display apparatus according to the present embodiment is not limited to the outer appearance indicated by A and B of FIG. 1.

The configuration of the display apparatus according to the present embodiment is not limited to the configuration indicated by A and B of FIG. 1.

For example, the display device according to this embodiment may have a configuration in which an operation device is provided at a position on the side of a user when mounted on the user, or a configuration in which an external operation device is connected to the side position. Examples of the position at which the operation device is provided or the position to which the external operation device is connected include a position on the temple member 12 shown in A and B of FIG. 1. For example, the operation device is provided on one or both of the left side and the right side of the user when mounted on the user. In addition, the external operation device is connected to one or both of the left side and the right side of the user when mounted on the user.

Here, examples of the operation device and the external operation device according to this embodiment include sensors and buttons. In addition, examples of the sensor according to this embodiment include infrared proximity sensors, various types of touch sensors such as an electrostatic capacity type, and image sensors.

The display apparatus according to the present embodiment includes a micro processing unit (MPU) and various processing circuits and may include a control unit (not illustrated) that controls the entire display apparatus. When the display apparatus according to the present embodiment and the display control apparatus according to the present embodiment are an integrated apparatus, for example, the control unit (not illustrated) serves to perform a process relevant to the display control method according to the present embodiment to be described below.

The display apparatus according to the present embodiment may include a communication unit (not illustrated) that performs wireless/wired communication with an external apparatus such as the display control apparatus according to the present embodiment. Examples of the communication unit (not illustrated) include a communication antenna and a radio frequency (RF) circuit (wireless communication), an IEEE 802.15.1 port and a transmission and reception circuit (wireless communication), an IEEE 802.11b port and a transmission and reception circuit (wireless communication), and a local area network (LAN) terminal and a transmission and reception circuit (wired communication). For example, the display apparatus according to the present embodiment may be configured to perform communication with an external apparatus such as the display control apparatus according to the present embodiment via a connected external communication device.

For example, the display apparatus according to the present embodiment may include a battery (not illustrated) that supplies power to each device. Here, a secondary battery such as a lithium-ion battery can be exemplified as the battery (not illustrated) included in the display apparatus according to the present embodiment. When the display apparatus according to the present embodiment receives power from an external power supply such as a commercial power supply to be driven, the display apparatus according to the present embodiment may not include a battery (not illustrated).

The display apparatus according to the present embodiment is not limited to the HMD indicated by A and B of FIG. 1. For example, the display apparatus according to the present embodiment may be an eyeglass (monocle) type apparatus. When the display apparatus according to the present embodiment is mounted on the user, for example, the display apparatus can be applied to an apparatus that has any shape and a configuration in which a display surface is located in front of the user.

Hereinafter, the process relevant to the display control method according to the present embodiment in the display control apparatus according to the present embodiment will be described exemplifying a case in which the display apparatus according to the present embodiment is the HMD indicated by A of FIG. 1.

<2> Outline of display control method according to embodiment

As described above, when a display object is displayed constantly at a fixed position on the display surface, e.g., when a stationary icon is displayed on the display surface, there is a concern that the user may feel discomfort since the user's field of view is blocked.

Therefore, for example, the display control device according to this embodiment controls the display of a display object which is displayed on the display surface in the display device (a display device which is mounted on a user so that the display surface capable of displaying a display object is positioned ahead of the user) according to this embodiment as shown in A and B of FIG. 1 (display control process). As the display control process according to this embodiment, for example, the display control device according to this embodiment moves a display object based on the movement of the display device according to this embodiment based on the movement of the user on which the display device according to this embodiment is mounted.

In greater detail, for example, the display control device according to this embodiment transfers and displays a display object which is displayed on the display surface from a reference position corresponding to the display object in accordance with the movement of the display device according to this embodiment. In addition, the display control device according to this embodiment transfers and displays the transferred display object from the position after the transfer to the reference position. Here, examples of the transfer of the display object according to the movement of the display device according to this embodiment include "transferring a display object which is displayed on the display surface from a reference position corresponding to the display object in a direction opposite to an axial direction in which the movement of the display device according to this embodiment is detected." In addition, the transfer of the display object according to this embodiment from the position after the movement to the reference position is, for example, automatically performed. In greater detail, for example, the display control device according to this embodiment transfers the transferred display object from the position after the transfer to the reference position "without user's operation" or "regardless of the motion of the user." Specific examples of the transfer of the display object according to the movement of the display device according to this embodiment will be described later.

Here, for example, the reference position according to this embodiment is a position which becomes a reference when the display object is disposed. For example, the reference position according to this embodiment is expressed in coordinates with their origin at a position set in a local space (a coordinate system transferring along with the direction of the user on which the display device according to this embodiment is mounted). Examples of the reference position according to this embodiment include a position on the display surface which is expressed in coordinates with their origin at a predetermined position (for example, a position at the lower-left corner of the display surface, a position at the upper-left corner of the display surface, a central position of the display surface, and the like) on the display surface.

Examples of the reference position according to this embodiment include a unique position for each display object. However, the reference position according to this embodiment is not limited thereto. For example, the reference position according to this embodiment may be a changeable position which is changed based on a user's operation such as a user's operation of transferring a display object.

In addition, examples of the axial direction in which the movement according to this embodiment is detected (hereinafter, simply referred to as an "axial direction according to this embodiment") include a yaw direction, a pitch direction, and a roll direction. The axial direction according to this embodiment is not limited thereto. For example, the axial direction according to this embodiment may include a front-back direction of the user on which the display device according to this embodiment is mounted.

The display control device according to this embodiment acquires information related to the movement of the display device according to this embodiment based on detection data which shows the movement and is detected by a sensor (or an external sensor which is connected to the display device according to this embodiment and is capable of detecting the movement of the display device according to this embodiment; the same applies hereinafter), capable of detecting the movement of the display device according to this embodiment, of the display device according to this embodiment. Here, examples of the information related to the movement according to this embodiment include "axial direction in which the movement according to this embodiment is detected," "moving direction and moving quantity (when the detected axial direction is a yaw direction or a pitch direction)" "inclination direction and inclination quantity (when the detected axial direction is a roll direction)."

For example, the display control device according to this embodiment moves a display object based on the movement of the display device according to this embodiment as described above by performing the display control process according to this embodiment. Accordingly, when the display control device according to this embodiment performs the display control process according to this embodiment, it is possible to decrease the possibility of giving a user a feeling of discomfort which is caused since the user's field of view is blocked, as in the case in which a display object is displayed constantly at a fixed position on the display surface.

Thus, the display control device according to this embodiment can decrease the possibility of giving a user a feeling of discomfort.

The movement of a display object which is realized through the display control process according to this embodiment is not limited to the above-described examples.

For example, when the axial direction according to this embodiment is a yaw direction, a pitch direction, or a roll direction, the display control device according to this embodiment may selectively transfer the transferred display object from the position after the transfer to the reference position for each axial direction based on the setting for each axial direction according to this embodiment.

Specifically, for example, when the axial direction according to this embodiment is a roll direction, the display control device according to this embodiment does not transfer the display object transferred from the reference position from the position after the transfer to the reference position.

In addition, for example, when the axial direction according to this embodiment is a yaw direction or a pitch direction, the display control device according to this embodiment selectively transfers the transferred display object from the position after the transfer to the reference position based on setting information (data) which is set through a user's operation or the like and indicates whether to transfer the display object from the position after the transfer to the reference position. For example, when the setting information indicates "transferring the display object from the position after the transfer to the reference position," the display control device according to this embodiment selectively transfers the display object transferred from the reference position from the position after the transfer to the reference position. For example, when the setting information does not indicate "transferring the display object from the position after the transfer to the reference position," the display control device according to this embodiment does not transfer the display object transferred from the reference position from the position after the transfer to the reference position. Here, examples of the setting information according to this embodiment include a graph indicating whether to transfer the display object from the position after the transfer to the reference position.

Needless to say, when the axial direction according to this embodiment is a roll direction, for example, the display control device according to this embodiment can selectively transfer the transferred display object from the position after the transfer to the reference position based on the setting information. In the following description, a case in which, when the axial direction according to this embodiment is a roll direction, the display control device according to this embodiment does not transfer the display object transferred from the reference position from the position after the transfer to the reference position will be exemplified.

Hereinafter, the display control process according to this embodiment will be described in more detail. In the following description, a case in which the display object according to this embodiment which is displayed on the display surface is an icon will be exemplified. Needless to say, the display object according to this embodiment is not limited to the icon.

<3> Display control process according to embodiment

(1) First example of display control process according to embodiment: example of process for case in which axial direction according to embodiment is yaw direction

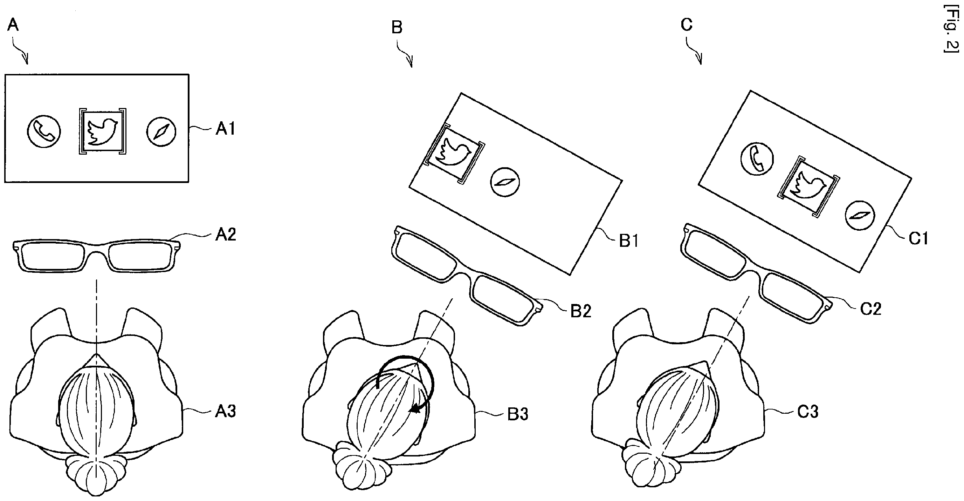

FIG. 2 is an illustrative diagram illustrating a first example of the display control process according to this embodiment in the display control device according to this embodiment, and shows an example of a process for the case in which the axial direction according to this embodiment is a yaw direction. A, B, and C shown in FIG. 2 show the motions of a user on which the display device according to this embodiment is mounted in a chronological manner in order of A, B, and C shown in FIG. 2, and show a case in which the movement in a yaw direction is detected due to the rightward turning of a head of the user. A1, B1, and C1 shown in FIG. 2 show the display surface, and show an example in which icons (an example of the display object) are displayed on the display surface. In addition, A2, B2, and C2 shown in FIG. 2 show a state of the display device according to this embodiment, and A3, B3, and C3 shown in FIG. 2 show a state of the user.

First, referring to A1 of FIG. 2 and B1 shown in FIG. 2, the display control device according to this embodiment transfers each icon displayed on the display surface based on the movement in the yaw direction of the display device according to this embodiment based on the movement of the user as shown in B3 of FIG. 2. In greater detail, for example, the display control device according to this embodiment transfers each icon to the left (a direction opposite to the axial direction in which the movement of the display device is detected) in FIG. 2 from the position corresponding to the reference position according to this embodiment which is shown in A1 of FIG. 2.

Next, referring to B1 of FIG. 2 and C1 shown in FIG. 2, the display control device according to this embodiment transfers the icon transferred from the position corresponding to the reference position according to this embodiment which is shown in A1 of FIG. 2 to the position (position after the transfer) shown in B1 of FIG. 2, from the position (position after the transfer) shown in B1 of FIG. 2 to the position (position corresponding to A1 of FIG. 2) corresponding to the reference position according to this embodiment which is shown in C1 of FIG. 2.

Here, for example, the display control device according to this embodiment transfers the display object at a predetermined set speed. The predetermined speed according to this embodiment may be, for example, a preset fixed value or a variable value which can be set through a user's operation or the like.

The method of setting the transferring speed of the display object according to this embodiment is not limited thereto.

For example, when transferring a display object, the display control device according to this embodiment may change the transferring speed of the display object based on one or more of the reference position corresponding to the display object, the position at which the display object is displayed, and the moving quantity which is calculated based on the detected movement of the display device according to this embodiment. Here, the position at which the display object according to this embodiment is displayed represents, for example, the reference position according to this embodiment, the position of the display object during transfer, or the position of the display object after the transfer. In addition, for example, the position at which the display object according to this embodiment is displayed is expressed in coordinates with their origin at a predetermined position on the display surface, as in the case of the reference position according to this embodiment. An example of the method of calculating the moving quantity according to this embodiment will be described later.

When changing the transferring speed of the display object based on the reference position corresponding to the display object or the position at which the display object is displayed, the display control device according to this embodiment determines a transferring speed of the display object corresponding to the reference position or the position at which the display object is displayed, using, for example, a table or the like in which coordinates corresponding to the positions on the display surface and transferring speeds of the display object are associated with each other. When changing the transferring speed of the display object based on the calculated moving quantity, the display control device according to this embodiment determines a transferring speed of the display object corresponding to the calculated moving quantity, using, for example, a table or the like in which moving quantities and transferring speeds of the display object are associated with each other. When changing the transferring speed of the display object based on two or more indices among the reference position corresponding to the display object, the position at which the display object is displayed, and the moving quantity which is calculated based on the detected movement of the display device according to this embodiment, the display control device according to this embodiment determines a transferring speed of the display object by taking an average of speed specified using, for example, a table for each index. Needless to say, the method of determining the transferring speed of the display object in the display control device according to this embodiment is not limited to the above-described examples.

In addition, the display control device according to this embodiment can also adjust the transferring speed of the display object using a set weighting coefficient.

Here, examples of the weighting coefficient according to this embodiment include a coefficient which is set for each display object, a coefficient which is set for each display object type, and a weighting coefficient common to the display objects. In addition, the weighting coefficient according to this embodiment may be a preset fixed value or a variable value which can be set through a user's operation or the like.

For example, when the display control device according to this embodiment transfers a display object as shown in FIG. 2, the display object is not constantly displayed at a fixed position on the display surface. Accordingly, for example, when the display control device according to this embodiment transfers a display object as shown in FIG. 2, it is possible to decrease the possibility of giving a user a feeling of discomfort.

In addition, for example, when the display control device according to this embodiment transfers a display object as shown in FIG. 2, it is possible to make a user feel as if the display object which is displayed on the display surface follows the movement of the user when the user on which the display device according to this embodiment is mounted carries out such a movement that the movement in the yaw direction is detected, e.g., when the user moves his or her head to the left or right.

In addition, for example, when the display control device according to this embodiment transfers a display object as shown in FIG. 2, the display object which is displayed on the display surface has a floating feeling, as compared with the case in which the display object is displayed constantly at a fixed position on the display surface. Furthermore, for example, when the display device according to this embodiment is a device such as a transmission-type HMD which allows a user to see a real landscape through a display surface, it is possible to make the user feel as if a display object is superimposed on an object in the real landscape.

Next, an example of the display control process according to this embodiment which is capable of realizing the display of a display object as shown in, for example, A1, B1, and C1 of FIG. 2 will be described in more detail.

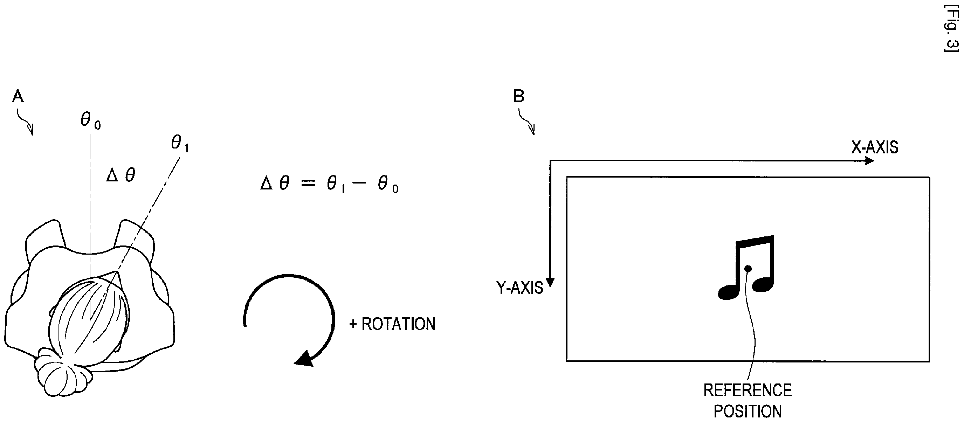

FIG. 3 is an illustrative diagram illustrating the first example of the display control process according to this embodiment in the display control device according to this embodiment. FIG. 3 shows premises of an example of the display control process according to this embodiment which is capable of realizing the display of a display object as shown in, for example, A1, B1, and C1 of FIG. 2. A shown in FIG. 3 shows an example of a method of obtaining a moving direction and a moving quantity based on the detected movement of the display device according to this embodiment. B shown in FIG. 3 shows an example of the reference position according to this embodiment and an example of coordinate axes set on the display surface. B shown in FIG. 3 shows an example in which an X-axis corresponding to the horizontal direction and a Y-axis corresponding to the vertical direction are set on the display surface. The reference position according to this embodiment is not limited to one point as shown in B of FIG. 3, and may be, for example, an area including a plurality of coordinates.

For example, an angle of the display device according to this embodiment which is specified based on detection data acquired from the sensor, capable of detecting the movement of the display device according to this embodiment, of the display device according to this embodiment is represented by theta. For example, the display device according to this embodiment calculates the moving direction and the moving quantity based on the detected movement through the following expression 1, based on an angle $theta_0$ at a first point of time and an angle $theta_1$ at a second point of time (a point of time after the first point of time). Here, the positive and negative values of delta theta shown in expression 1 represent the moving direction, and the absolute value of delta theta represents the moving quantity. In the example shown in FIG. 3, the rotation direction shown by the arrow in A of FIG. 3 is the positive direction.

[Math.1]

$$\Delta\theta = \theta_1 - \theta_0 \quad \text{(Expression 1)}$$

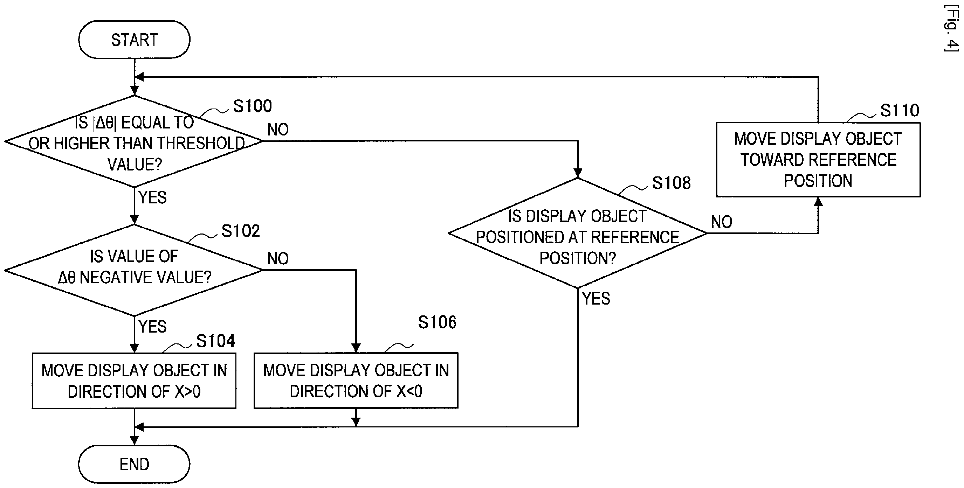

FIG. 4 is an illustrative diagram illustrating the first example of the display control process according to this embodiment in the display control device according to this embodiment. FIG. 4 shows an example of a flowchart showing the display control process according to this embodiment which is capable of realizing the display of a display object as shown in, for example, A1, B1, and C1 of FIG. 2.

The display control device according to this embodiment determines whether the absolute value of the calculated delta theta (that is, the moving quantity according to this embodiment) is equal to or higher than a predetermined set threshold value (S100). Here, the predetermined threshold value related to the process of step S100 may be a preset fixed value or a variable value which can be appropriately set through a user's operation or the like.

The process of step S100 is not limited to the example shown in FIG. 4. For example, the display control device according to this embodiment may determine whether the absolute value of the calculated delta theta is higher than the predetermined set threshold value in step S100.

In step S100, when the absolute value of the calculated delta theta is determined to be equal to or higher than the predetermined set threshold value, the display control device according to this embodiment determines whether the value of the calculated delta theta is a negative value (S102).

When the value of the calculated delta theta is determined to be a negative value in step S102, the display control device according to this embodiment transfers the display object in a positive direction of the X-axis on the display surface (S104). When the value of the calculated delta theta is determined to be a positive value in step S102, the display control device according to this embodiment transfers the display object in a negative direction of the X-axis on the display surface (S106). Here, the display control device according to this embodiment transfers the display object at a speed set for each display object in steps S104 and S106.

For example, when the process of step S104 or S106 is performed, "transferring each icon to the left (a direction opposite to the axial direction in which the movement of the display device is detected) in FIG. 2 from the position corresponding to the reference position according to this embodiment which is shown in A1 of FIG. 2" as shown in A1 and B1 of FIG. 2 is realized.

In addition, when the absolute value of the calculated delta theta is not determined to be equal to or higher than the predetermined set threshold value in step S100, the display control device according to this embodiment determines whether the display object is positioned at the reference position (S108). The display control device according to this embodiment determines that the display object is positioned at the reference position when, for example, the current coordinates of the display object are the same as the coordinates corresponding to the reference position.

When the display object is determined to be positioned at the reference position in step S108, the display control device according to this embodiment terminates the display control process according to this embodiment.

In addition, when the display object is not determined to be positioned at the reference position in step S108, the display control device according to this embodiment moves the display object toward the reference position (S110). The display control device according to this embodiment repeats the process from step S100.

For example, when the process of step S110 is performed, "transferring the icon transferred from the position corresponding to the reference position according to this embodiment which is shown in A1 of FIG. 2 to the position (position after the transfer) shown in B1 of FIG. 2, from the position (position after the transfer) shown in B1 of FIG. 2 to the position (position corresponding to A1 of FIG. 2) corresponding to the reference position according to this embodiment which is shown in C1 of FIG. 2" as shown in B1 and C1 of FIG. 2 is realized.

For example, as shown in FIG. 4, the display control device according to this embodiment compares the calculated moving quantity with a predetermined threshold value and transfers the display object in accordance with the comparison result. In addition, for example, as shown in FIG. 4, the display control device according to this embodiment transfers the display object in a direction opposite to the calculated moving direction.

The display control device according to this embodiment performs, for example, the process shown in FIG. 4 as the display control process according to the first example. When the display control device according to this embodiment performs, for example, the process shown in FIG. 4, the display of a display object can be realized as shown in A1, B1, and C1 of Fig. 2. Needless to say, the display control process in the display control device according to this embodiment, which is capable of realizing the display of a display object as shown in A1, B1, and C1 of FIG. 2, is not limited to the example shown in FIG. 4.

(2) Second example of display control process according to embodiment: example of process for case in which axial direction according to embodiment is pitch direction

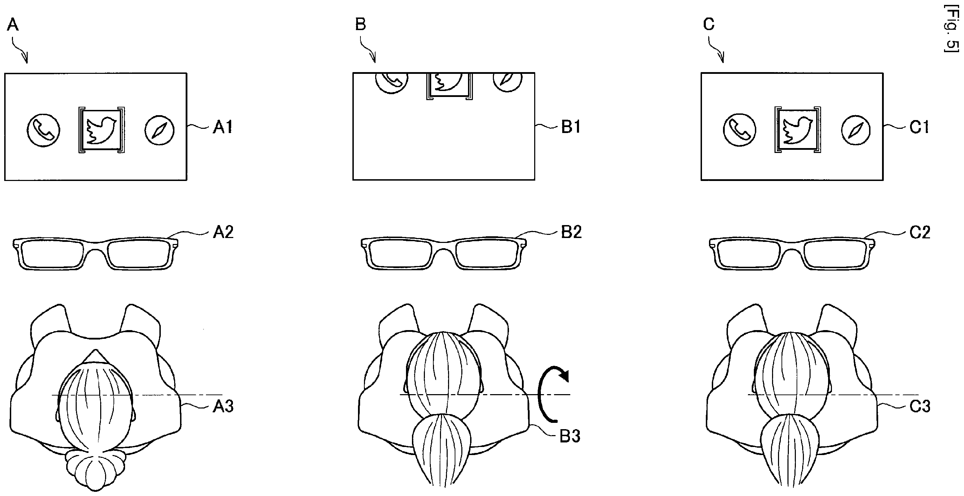

FIG. 5 is an illustrative diagram illustrating a second example of the display control process according to this embodiment in the display control device according to this embodiment, and shows an example of a process for the case in which the axial direction according to this embodiment is a pitch direction. A, B, and C shown in FIG. 5 show the motions of a user on which the display device according to this embodiment is mounted in a chronological manner in order of A, B, and C shown in FIG. 5, and show a case in which the movement in a pitch direction is detected due to the forward turning of a head of the user. A1, B1, and C1 shown in FIG. 5 show the display surface, and show an example in which icons (an example of the display object) are displayed on the display surface. In addition, A2, B2, and C2 shown in FIG. 5 show a state of the display device according to this embodiment, and A3, B3, and C3 shown in FIG. 5 show a state of the user.

First, referring to A1 of FIG. 5 and B1 shown in FIG. 5, the display control device according to this embodiment transfers each icon displayed on the display surface based on the movement in the pitch direction of the display device according to this embodiment based on the movement of the user as shown in B3 of FIG. 5. In greater detail, for example, the display control device according to this embodiment transfers each icon upward (a direction opposite to the axial direction in which the movement of the display device is detected) in FIG. 5 from the position corresponding to the reference position according to this embodiment which is shown in A1 of FIG. 5.

Next, referring to B1 of FIG. 5 and C1 shown in FIG. 5, the display control device according to this embodiment transfers the icon transferred from the position corresponding to the reference position according to this embodiment which is shown in A1 of FIG. 5 to the position (position after the transfer) shown in B1 of FIG. 5, from the position (position after the transfer) shown in B1 of FIG. 5 to the position (position corresponding to A1 of FIG. 5) corresponding to the reference position according to this embodiment which is shown in C1 of FIG. 5.

Here, for example, the display control device according to this embodiment transfers the display object at a speed set for each display object as in the display control process according to the first example shown in the above-described (1).

For example, when the display control device according to this embodiment transfers a display object as shown in FIG. 5, the display object is not constantly displayed at a fixed position on the display surface. Accordingly, for example, when the display control device according to this embodiment transfers a display object as shown in FIG. 5, it is possible to decrease the possibility of giving a user a feeling of discomfort.

In addition, for example, when the display control device according to this embodiment transfers a display object as shown in FIG. 5, it is possible to make a user feel as if the display object which is displayed on the display surface follows the movement of the user when the user on which the display device according to this embodiment is mounted carries out such a movement that the movement in the pitch direction is detected, e.g., when the user moves his or her head upward or downward.

In addition, for example, when the display control device according to this embodiment transfers a display object as shown in FIG. 5, the display object which is displayed on the display surface has a floating feeling, as compared with the case in which the display object is displayed constantly at a fixed position on the display surface. Furthermore, for example, when the display device according to this embodiment is a device such as a transmission-type HMD which allows a user to see a real landscape through a display surface, it is possible to make the user feel as if a display object is superimposed on an object in the real landscape.

Next, an example of the display control process according to this embodiment which is capable of realizing the display of a display object as shown in, for example, A1, B1, and C1 of FIG. 5 will be described in more detail.

For example, the display control device according to this embodiment performs a process similar to the display control process according to the first example shown in FIG. 4. When performing a process similar to the display control process according to the first example shown in FIG. 4, the display control device according to this embodiment moves the display object in the Y-axis direction shown in B of FIG. 3 in steps S104 and S106 of FIG. 4.

For example, when the display control device according to this embodiment performs a process similar to the display control process according to the first example shown in FIG. 4, the display of a display object can be realized as shown in A1, B1, and C1 of FIG. 5. Needless to say, the display control process in the display control device according to this embodiment which is capable of realizing the display of a display object as shown in A1, B1, and C1 of FIG. 5 is not limited to the process similar to the display control process according to the first example shown in FIG. 4.

(3) Third example of display control process according to embodiment: example of process for case in which axial direction according to embodiment is roll direction

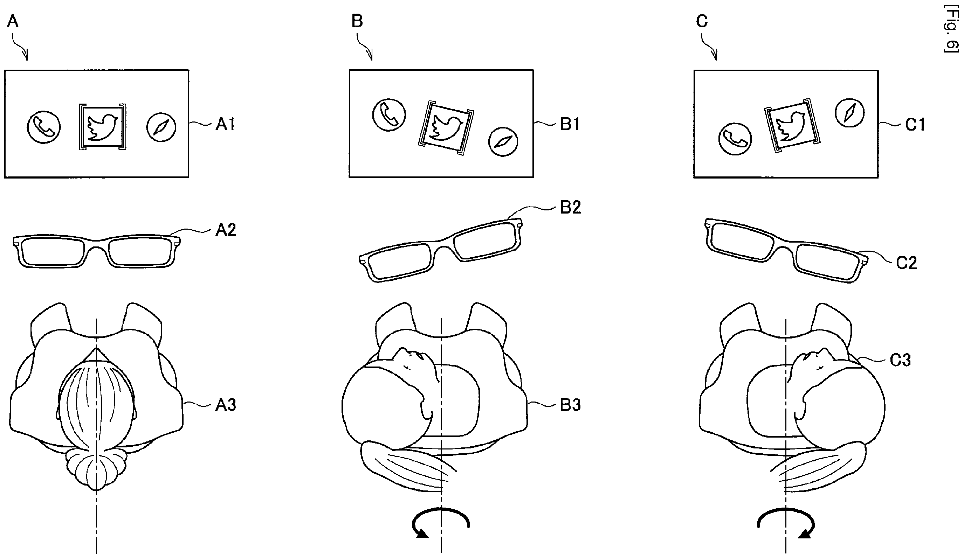

FIG. 6 is an illustrative diagram illustrating a third example of the display control process according to this embodiment in the display control device according to this embodiment, and shows an example of a process for the case in which the axial direction according to this embodiment is a roll direction. A shown in FIG. 6 shows an example of a state before a user on which the display device according to this embodiment is mounted carries out a motion. B shown in FIG. 6 shows an example of a state when the user carries out the motion, and shows a case in which the movement in the roll direction is detected due to the leftward inclination of a head of the user. C shown in FIG. 6 shows another example of the state when the user carries out the motion, and shows a case in which the movement in the roll direction is detected due to the rightward inclination of the head of the user. A1, B1, and C1 shown in FIG. 6 show the display surface, and show an example in which icons (an example of the display object) are displayed on the display surface. In addition, A2, B2, and C2 shown in FIG. 6 show a state of the display device according to this embodiment, and A3, B3, and C3 shown in FIG. 6 show a state of the user.

First, referring to A1 of FIG. 6 and B1 shown in FIG. 6, the display control device according to this embodiment transfers each icon displayed on the display surface based on the movement in the roll direction of the display device according to this embodiment based on the movement of the user as shown in B3 of FIG. 6. In greater detail, for example, the display control device according to this embodiment transfers each icon by rotating each icon to the right (a direction opposite to the axial direction in which the movement of the display device is detected) in FIG. 6 from the position corresponding to the reference position according to this embodiment which is shown in A1 of FIG. 6.

Next, referring to B1 of FIG. 6 and C1 shown in FIG. 6, the display control device according to this embodiment transfers each icon displayed on the display surface based on the movement in the roll direction of the display device according to this embodiment based on the movement of the user as shown in C3 of FIG. 6. In greater detail, for example, the display control device according to this embodiment transfers each icon by rotating each icon to the left (a direction opposite to the axial direction in which the movement of the display device is detected) in FIG. 6 from the position corresponding to the reference position according to this embodiment which is shown in A1 of FIG. 6.

Here, for example, the display control device according to this embodiment transfers the display object by rotating the display object at a predetermined set speed. The predetermined speed according to this embodiment may be, for example, a preset fixed value or a variable value which can be set through a user's operation or the like.

The method of setting the transferring speed of the display object according to this embodiment when rotating and thereby transferring the display object is not limited thereto.

For example, when rotating and thereby transferring the display object, the display control device according to this embodiment may change the transferring speed of the display object based on one or both of the reference position corresponding to the display object and the calculated inclination quantity. An example of the method of calculating the inclination quantity according to this embodiment will be described later.

When changing the transferring speed of the display object based on the reference position corresponding to the display object, the display control device according to this embodiment determines a transferring speed of the display object corresponding to the reference position, using, for example, a table or the like in which coordinates corresponding to the positions on the display surface and rotation speeds of the display object are associated with each other. When changing the transferring speed of the display object based on the calculated inclination quantity, the display control device according to this embodiment determines a transferring speed of the display object corresponding to the calculated inclination quantity, using, for example, a table or the like in which inclination quantities and rotation speeds of the display object are associated with each other. When changing the transferring speed of the display object based on both indices of the reference position corresponding to the display object and the inclination quantity which is calculated based on the detected movement of the display device according to this embodiment, the display control device according to this embodiment determines a transferring speed of the display object by taking an average of speed specified using, for example, a table for each index. Needless to say, the method of determining the transferring speed of the display object in the display control device according to this embodiment when rotating and thereby transferring the display object is not limited to the above-described examples.

The display control device according to this embodiment can also adjust the transferring speed of the display object using a set weighting coefficient as in the display control process according to the first example shown in the above-described (1).

When the axial direction according to this embodiment related to the detected movement of the display device according to this embodiment is a roll direction, the display control device according to this embodiment transfers the display object as shown in, for example, A1, B1, and C1 of FIG. 6.

When the axial direction according to this embodiment related to the detected movement of the display device according to this embodiment is a roll direction, the method of expressing a display object which is displayed on the display surface as a result of the transfer of the display object by the display control device according to this embodiment is not limited to the examples shown in A1, B1, and C1 of FIG. 6.

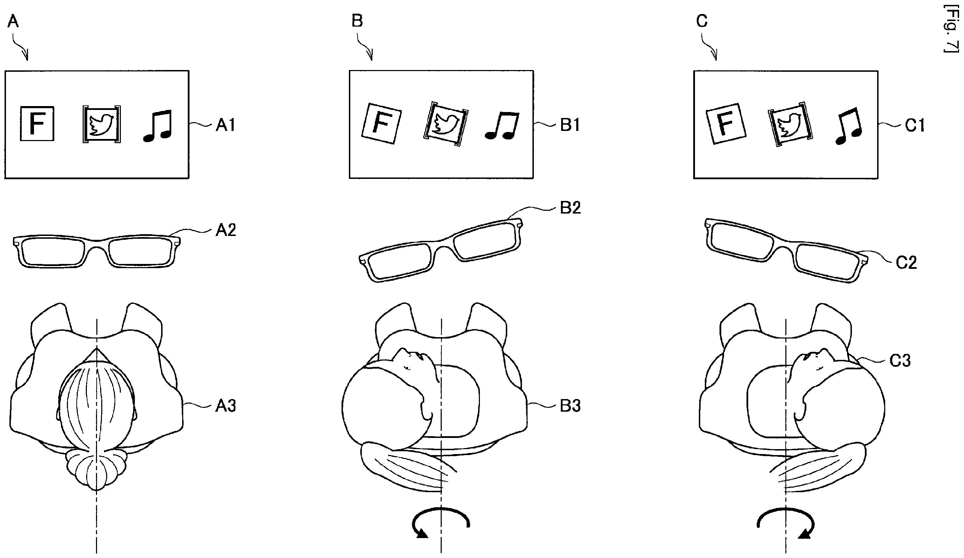

FIG. 7 is an illustrative diagram illustrating the third example of the display control process according to this embodiment in the display control device according to this embodiment, and shows another example of the process for the case in which the axial direction according to this embodiment is a roll direction. A shown in FIG. 7 shows an example of a state before a user on which the display device according to this embodiment is mounted carries out a motion. B shown in FIG. 7 shows an example of a state when the user carries out the motion, and shows a case in which the movement in the roll direction is detected due to the leftward inclination of a head of the user as in B shown in FIG. 6. C shown in FIG. 7 shows another example of the state when the user carries out the motion, and shows a case in which the movement in the roll direction is detected due to the rightward inclination of the head of the user as in C shown in FIG. 6. A1, B1, and C1 shown in FIG. 7 show the display surface, and show an example in which icons (an example of the display object) are displayed on the display surface. In addition, A2, B2, and C2 shown in FIG. 7 show a state of the display device according to this embodiment, and A3, B3, and C3 shown in FIG. 7 show a state of the user.

First, referring to A1 of FIG. 7 and B1 shown in FIG. 7, the display control device according to this embodiment transfers each icon displayed on the display surface based on the movement in the roll direction of the display device according to this embodiment based on the movement of the user as shown in B3 of FIG. 7. In greater detail, for example, the display control device according to this embodiment transfers each icon by rotating each icon to the right (a direction opposite to the axial direction in which the movement of the display device is detected) in FIG. 7 from the position corresponding to the reference position according to this embodiment which is shown in A1 of FIG. 7.

Next, referring to B1 of FIG. 7 and C1 shown in FIG. 7, the display control device according to this embodiment transfers each icon displayed on the display surface based on the movement in the roll direction of the display device according to this embodiment based on the movement of the user as shown in C3 of FIG. 7. In greater detail, for example, the display control device according to this embodiment transfers each icon by rotating each icon to the left (a direction opposite to the axial direction in which the movement of the display device is detected) in FIG. 7 from the position corresponding to the reference position according to this embodiment which is shown in A1 of FIG. 7.

Here, when comparing B1 of FIG. 6 with B1 of FIG. 7 and comparing C1 of FIG. 6 with C1 of FIG. 7, it is found that the expression of the display objects displayed on the display surface, resulting from the transfer of the respective icons, is different. For example, as shown in B1 of FIG. 6, B1 of FIG. 7, C1 of FIG. 6, and C1 of FIG. 7, the display control device according to this embodiment can use various expression methods when the axial direction according to this embodiment related to the detected movement of the display device according to this embodiment is a roll direction.

For example, when the display control device according to this embodiment transfers a display object as shown in FIG. 6 or 7, the display object is not constantly displayed at a fixed position on the display surface. Accordingly, for example, when the display control device according to this embodiment transfers a display object as shown in FIG. 6 or 7, it is possible to decrease the possibility of giving a user a feeling of discomfort.

In addition, for example, when the display control device according to this embodiment transfers a display object as shown in FIG. 6 or 7, the display object is horizontally displayed with respect to the ground even when the user on which the display device according to this embodiment is mounted inclines his or her head.

Next, an example of the display control process according to this embodiment which is capable of realizing the display of a display object as shown in A1, B1, and C1 of FIG. 6 and A1, B1, and C1 of FIG. 7 will be described in more detail.

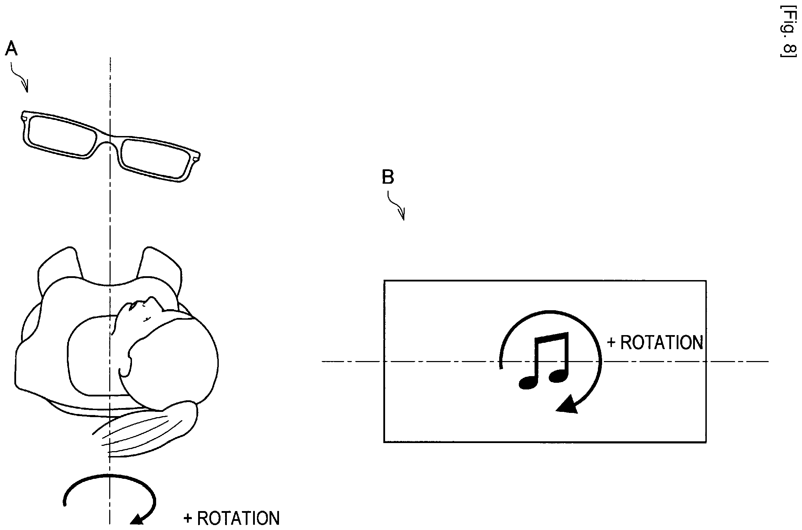

FIG. 8 is an illustrative diagram illustrating the third example of the display control process according to this embodiment in the display control device according to this embodiment. FIG. 8 shows premises of an example of the display control process according to this embodiment which is capable of realizing the display of a display object as shown in, for example, A1, B1, and C1 of FIG. 6 and A1, B1, and C1 of FIG. 7. A and B shown in FIG. 8 show an example of an inclination direction based on the movement of the display device according to this embodiment. Hereinafter, a case in which the rotation direction shown by the arrow in A and B of FIG. 8 is a positive direction will be exemplified.

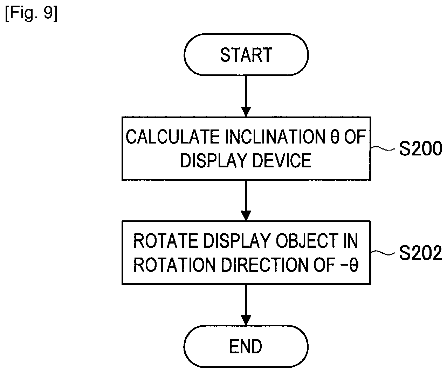

FIG. 9 is an illustrative diagram illustrating the third example of the display control process according to this embodiment in the display control device according to this embodiment. FIG. 9 shows an example of a flowchart showing the display control process according to this embodiment which is capable of realizing the display of a display object as shown in, for example, A1, B1, and C1 of FIG. 6 and A1, B1, and C1 of FIG. 7.

The display control device according to this embodiment calculates an inclination theta of the display device according to this embodiment based on the detected movement of the display device according to this embodiment (S200). For example, the display control device according to this embodiment calculates the inclination theta based on detection data acquired from the sensor, capable of detecting the movement of the display device according to this embodiment, of the display device according to this embodiment. Here, the positive and negative values of the inclination theta represent the inclination direction, and the absolute value of the inclination theta represents the inclination quantity.

When the inclination theta (that is, the inclination direction and the inclination quantity based on the detected movement) is calculated in step S200, the display control device according to this embodiment transfers the display object by rotating the display object by the absolute value of the inclination theta (that is, inclination quantity) in a direction opposite to the direction represented by the value of the inclination theta (that is, the inclination direction).

For example, when performing the process of step S202, "transferring the display object through the rotation of the display object by the calculated inclination quantity in a direction opposite to the calculated inclination direction" is realized.

For example, the display control device according to this embodiment performs the process shown in FIG. 9 as the display control process according to the third example. For example, when the display control device according to this embodiment performs the process shown in FIG. 9, the display of a display object can be realized as shown in A1, B1, and C1 of FIG. 6 and A1, B1, and C1 of FIG. 7.

The display control process according to the third example according to this embodiment is not limited to, for example, the example shown in FIG. 9. For example, the display control device according to this embodiment can determine whether to perform the display control process according to the third example according to this embodiment to selectively perform the display control process according to the third example according to this embodiment.

When the display control process according to the third example according to this embodiment is selectively performed, the display control device according to this embodiment determines whether to perform the display control process according to the third example according to this embodiment based on, for example, process setting information (data) indicating whether to perform the display control process according to the third example according to this embodiment.

Examples of the process setting information according to this embodiment include a graph indicating whether to perform the display control process according to the third example according to this embodiment. Regarding the process setting information according to this embodiment, for example, whether to perform the display control process according to the third example according to this embodiment is set based on a user's operation or the like. Here, the process setting information according to this embodiment may be, for example, data for each display object or data common to the display objects.

For example, as described above, when the display control device according to this embodiment selectively performs the display control process according to the third example according to this embodiment, a user can turn off the function of performing the display control process according to the third example according to this embodiment in the display control device according to this embodiment. When the user does not want to display the icon while maintaining the icon horizontally with respect to the ground, e.g., when the user wants to operate the icon (an example of the display object) while lying down, the user turns off the function of performing the display control process according to the third example according to this embodiment.

Accordingly, for example, as described above, when the display control device according to this embodiment selectively performs the display control process according to the third example according to this embodiment, the display control device according to this embodiment can further improve the user's convenience.

(4) Fourth example of display control process according to embodiment: example of process for case in which axial direction according to embodiment includes two or more axial directions among yaw direction, pitch direction, and roll direction

In the display control process according to the first example shown in the above-described (1) to the display control process according to the third example shown in the above-described (3), an example of the display control process for the case in which the axial direction according to this embodiment is any of a yaw direction, a pitch direction, and a roll direction is shown. However, the display control process according to this embodiment is not limited to the process for the case in which the axial direction according to this embodiment is any of a yaw direction, a pitch direction, and a roll direction.

For example, when the axial direction according to this embodiment includes two or more axial directions among a yaw direction, a pitch direction, and a roll direction, the display control device according to this embodiment can also perform the processes corresponding to the respective axial directions according to this embodiment (the display control process according to the first example shown in the above-described (1) to the display control process according to the third example shown in the above-described (3)) in parallel. That is, for example, the display control device according to this embodiment can combine two or more of the display control process according to the first example shown in the above-described (1) to the display control process according to the third example shown in the above-described (3).

(5) Fifth example of display control process according to embodiment: example of display control process capable of realizing multilayer expression of display object

The display control process according to this embodiment is not limited to the display control process according to the first example shown in the above-described (1) to the display control process according to the fourth example shown in the above-described (4). For example, the display control device according to this embodiment may perform, as the display control process according to this embodiment, a process for realizing an expression in which a display object which is displayed on the display surface is disposed as if it were in any of a plurality of display layers (hereinafter referred to as "multilayer expression").

(5-1) First example of display control process according to fifth example according to embodiment

For example, the display control device according to this embodiment realizes the multilayer expression according to this embodiment by changing, for each display object, the transferring quantity of the display object in accordance with the detected movement of the display device according to this embodiment.

For example, the display control device according to this embodiment changes, for each display object, the transferring quantity of the display object in accordance with the detected movement based on properties set in the display object. Here, the properties set in the display object according to this embodiment show, for example, a level related to the transferring quantity according to the detected movement of the display device according to this embodiment, and show a display layer in which the display object is to be disposed among the plurality of display layers.

For example, the display control device according to this embodiment changes the moving quantity of the display object in accordance with the detected movement based on property information (data) in which properties corresponding to the display object are set.

Here, examples of the property information according to this embodiment include data including an adjustment coefficient to be multiplied by the moving quantity or the inclination quantity calculated based on the detected movement of the display device according to this embodiment. For example, when the property information according to this embodiment includes the adjustment coefficient, the display control device according to this embodiment multiplies the moving quantity or the inclination quantity calculated based on the detected movement of the display device according to this embodiment by the adjustment coefficient included in the property information to set the transferring quantity of the display object as a transferring quantity corresponding to the properties set in the display object.

The property information according to this embodiment is not limited to the above-described examples.

For example, the property information according to this embodiment may directly numerically represent the level related to the transferring quantity according to the detected movement of the display device according to this embodiment. When the property information according to this embodiment directly numerically represents the level related to the transferring quantity according to the detected movement of the display device according to this embodiment, the display control device according to this embodiment specifies the adjustment coefficient corresponding to the property information according to this embodiment using a table or the like in which numerical values representing the level related to the transferring quantity and the adjustment coefficients are associated with each other. In addition, for example, the display control device according to this embodiment multiplies the moving quantity or the inclination quantity calculated based on the detected movement of the display device according to this embodiment by the specified adjustment coefficient to set the transferring quantity of the display object as a transferring quantity corresponding to the properties set in the display object.

Here, for example, the properties corresponding to the display object according to this embodiment may be preset or set based on a user's operation. In addition, the properties corresponding to the display object according to this embodiment may be dynamically set by, for example, the display control device according to this embodiment or the display device according to this embodiment. Examples of the presetting of the properties include setting a display object, such as a clock which is displayed on the display surface or an icon which displays remaining battery power, which is assumed to be displayed constantly on the display surface to have properties corresponding to "the level representing that no transfer is made in accordance with the detected movement of the display device according to this embodiment." In addition, examples of the dynamic setting of the properties corresponding to the display object according to this embodiment by the display control device or the like according to this embodiment include setting an icon corresponding to a mail application to have properties according to the number of mail items which are managed by the mail application.

For example, as described above, when the transfer quantity of the display object is changed for each display object in accordance with the detected movement of the display device according to this embodiment based on the properties set in the display object, the user seeing the transferring display object can feel as if the display object is disposed in a different display layer depending on the moving mode of the display object. Accordingly, for example, as described above, when the transferring quantity of the display object is changed for each display object in accordance with the detected movement of the display device according to this embodiment based on the properties set in the display object, the multilayer expression according to this embodiment can be realized.

The display control process according to the fifth example according to this embodiment is not limited to the process of changing the transferring quantity based on the properties set in the display object as described above. For example, the display control device according to this embodiment can also change, for each display object type, the transferring quantity of the display object in accordance with the detected movement of the display device according to this embodiment. Here, examples of the display object type according to this embodiment include icons corresponding to applications, thumbnail images, and web screens.

(5-2) Second example of display control process according to fifth example according to embodiment

For example, the display control device according to this embodiment may display a display object of which the transferring quantity according to the detected movement is smaller in a smaller size.

On the other hand, the display control device according to this embodiment can also display a display object of which the transferring quantity according to the detected movement is larger in a larger size. Hereinafter, a second example of the display control process according to the fifth example according to this embodiment will be described using the case in which the display control device according to this embodiment displays a display object of which the transferring quantity according to the detected movement is smaller in a smaller size as an example. For example, by performing a process similar to the following "process related to the case in which a display object of which the transferring quantity according to the detected movement is smaller is displayed in a smaller size," the display control device according to this embodiment can realize display of a display object of which the transferring quantity according to the detected movement is larger in a larger size.

For example, using a table or the like in which transferring quantities and reduction coefficients for reducing the size of the display object are associated with each other, the display control device according to this embodiment displays a display object of which the transferring quantity according to the detected movement is smaller in a smaller size. Needless to say, the process for displaying a display object of which the transferring quantity according to the detected movement is smaller in a smaller size in the display control device according to this embodiment is not limited to the above-described examples.

For example, as described above, when the display control device according to this embodiment displays a display object of which the transferring quantity according to the detected movement is smaller in a smaller size, a user can feel as if the display object is disposed in a different display layer. Accordingly, for example, as described above, when the display control device according to this embodiment displays a display object of which the transferring quantity according to the detected movement is smaller in a smaller size, the multilayer expression according to this embodiment can be realized.

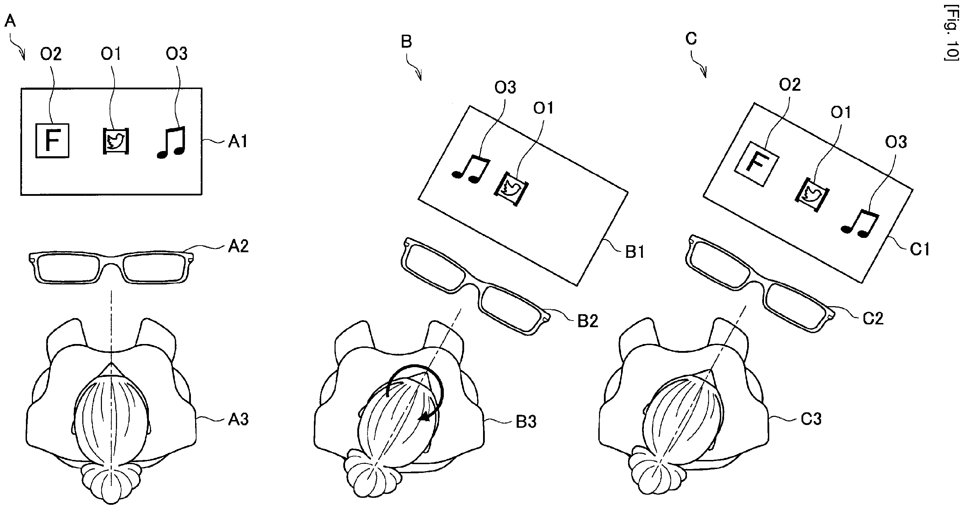

FIG. 10 is an illustrative diagram illustrating the fifth example of the display control process according to this embodiment in the display control device according to this embodiment. FIG. 10 shows an example of the display control process related to the multilayer expression of the display object, and shows an example in which the display control device according to this embodiment displays a display object of which the transferring quantity according to the detected movement is smaller in a smaller size. Specifically, FIG. 10 shows an example in which a display object O1 shown in FIG. 10 is displayed smaller than display objects O2 and O3 shown in FIG. 10.

Here, FIG. 10 shows a case in which the axial direction according to this embodiment is a yaw direction as in FIG. 2. A, B, and C shown in FIG. 10 show the motions of a user on which the display device according to this embodiment is mounted in a chronological manner in order of A, B, and C shown in FIG. 10, and show a case in which the movement in a yaw direction is detected due to the rightward turning of a head of the user as in the example shown in FIG. 2. A1, B1, and C1 shown in FIG. 10 show the display surface, and show an example in which icons (an example of the display object) are displayed on the display surface. In addition, A2, B2, and C2 shown in FIG. 10 show a state of the display device according to this embodiment, and A3, B3, and C3 shown in FIG. 10 show a state of the user.

First, referring to A1 of FIG. 10 and B1 shown in FIG. 10, the display control device according to this embodiment transfers each icon to the left (a direction opposite to the axial direction in which the movement of the display device is detected) in FIG. 10 from the position corresponding to the reference position according to this embodiment which is shown in A1 of FIG. 10 as in the example shown in FIG. 2, based on the movement in the yaw direction of the display device according to this embodiment based on the movement of the user as shown in B3 of FIG. 10. At this time, the display control device according to this embodiment decreases the transferring quantity of the display object O1 displayed smaller than the display objects O2 and O3 as shown in A1 of FIG. 10 and B1 shown in FIG. 10.

Next, referring to B1 of FIG. 10 and C1 shown in FIG. 10, the display control device according to this embodiment transfers the icon transferred from the position corresponding to the reference position according to this embodiment which is shown in A1 of FIG. 10 to the position (position after the transfer) shown in B1 of FIG. 10, from the position (position after the transfer) shown in B1 of FIG. 10 to the position (position corresponding to A1 of FIG. 10) corresponding to the reference position according to this embodiment which is shown in C1 of FIG. 10 as in the example shown in FIG. 2.

For example, as shown in FIG. 10, when the display control device according to this embodiment displays a display object of which the transferring quantity according to the detected movement is smaller in a smaller size, a user can feel as if the display object is disposed in a different display layer. Accordingly, for example, as shown in FIG. 10, when the display control device according to this embodiment displays a display object of which the transferring quantity according to the detected movement is smaller in a smaller size, the multilayer expression according to this embodiment can be realized.

(5-3) Third example of display control process according to fifth example according to embodiment

For example, the display control device according to this embodiment may increase the transmittance of a display object of which the transferring quantity according to the detected movement is smaller.

On the other hand, the display control device according to this embodiment can also decrease the transmittance of a display object of which the transferring quantity according to the detected movement is larger. Hereinafter, a third example of the display control process according to the fifth example according to this embodiment will be described using the case in which the display control device according to this embodiment increases the transmittance of a display object of which the transferring quantity according to the detected movement is smaller as an example. For example, by performing a process similar to the following "process related to the case in which the transmittance of a display object of which the transferring quantity according to the detected movement is smaller is increased," the display control device according to this embodiment can decrease the transmittance of a display object of which the transferring quantity according to the detected movement is larger.

For example, using a table or the like in which transferring quantities and transmittances of the display object are associated with each other, the display control device according to this embodiment displays a display object of which the transferring quantity according to the detected movement is smaller with increased transmittance. Needless to say, the process for displaying a display object of which the transferring quantity according to the detected movement is smaller with increased transmittance in the display control device according to this embodiment is not limited to the above-described examples.

For example, as described above, when the display control device according to this embodiment displays a display object of which the transferring quantity according to the detected movement is smaller with increased transmittance, a user can feel as if the display object is disposed in a different display layer. Accordingly, for example, as described above, when the display control device according to this embodiment displays a display object of which the transferring quantity according to the detected movement is smaller with increased transmittance, the multilayer expression according to this embodiment can be realized.

(5-4) Fourth example of display control process according to fifth example according to embodiment

The display object according to this embodiment is not limited to the display object which is permitted to be transferred in accordance with the detected movement (which may hereinafter be referred to as a "first display object"). The display object according to this embodiment may include, for example, a display object which is not permitted to be transferred in accordance with the detected movement (which may hereinafter be referred to as a "second display object").

Examples of the first display object according to this embodiment include a display object assigned to a local space (a coordinate system transferring along with the direction of the user on which the display device according to this embodiment is mounted). Specific examples of the first display object according to this embodiment include a display object of an operation system which can be operated by a user.

Here, the coordinates in the local space which represent the position of the first display object according to this embodiment are obtained from, for example, a relative angle (for example, indicating an angle at which the display device according to this embodiment is moved for a fixed time) of the display device according to this embodiment, which is calculated based on detection data acquired from the sensor, capable of detecting the movement of the display device according to this embodiment, of the display device according to this embodiment and acceleration shown by the acquired detection data.

In addition, examples of the second display object according to this embodiment include a display object assigned to a global space (a coordinate system having no changes along with the direction of the user on which the display device according to this embodiment is mounted). Specific examples of the second display object according to this embodiment include a display object serving as a marker for object recognition.

Here, the coordinates in the global space which represent the position of the second display object according to this embodiment are obtained from, for example, absolute angle (azimuth) information (data), position information (data) obtained through the Global Positioning System (GPS), and captured images (for example, captured images obtained by capturing the images of the front of the user on which the display device according to this embodiment is mounted, captured images obtained by capturing the movement of the user, and the like).

As described above, when the display object according to this embodiment includes the first display object and the second display object, for example, the display control device according to this embodiment transfers the first display object in accordance with the detected movement and does not transfer the second display object when the movement of the display device according to this embodiment is detected.

For example, as described above, when the display control device according to this embodiment transfers the first display object in accordance with the detected movement and does not transfer the second display object, a user can feel as if the display object is disposed in a different display layer. Accordingly, for example, as described above, when the display control device according to this embodiment transfers the first display object in accordance with the detected movement and does not transfer the second display object, the multilayer expression according to this embodiment can be realized.

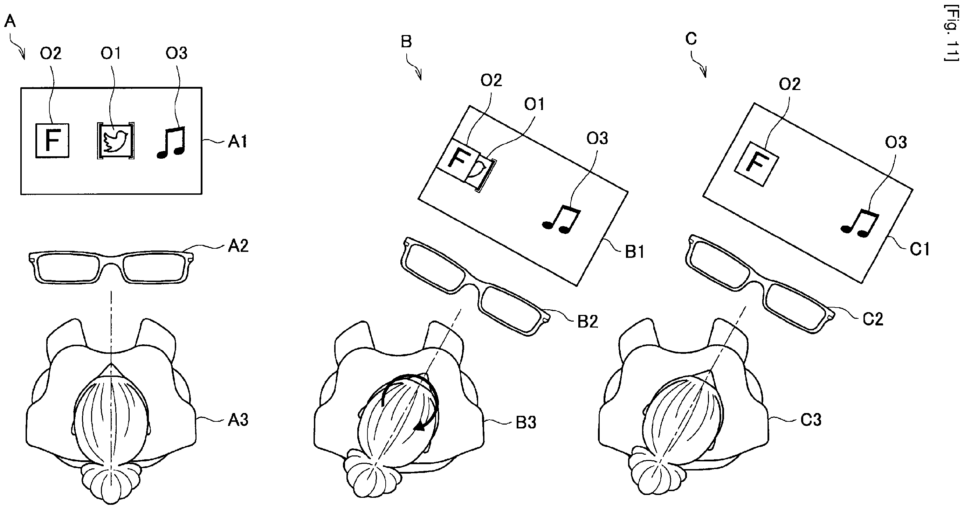

FIG. 11 is an illustrative diagram illustrating the fifth example of the display control process according to this embodiment in the display control device according to this embodiment. FIG. 11 shows another example of the display control process related to the multilayer expression of the display object, and shows an example of a case in which the display control device according to this embodiment transfers a first display object in accordance with the detected movement and does not transfer a second display object. Specifically, FIG. 11 shows an example in which a display object O1 shown in FIG. 11 is a display object assigned to a global space (a coordinate system having no changes along with the direction of the user on which the display device according to this embodiment is mounted), that is, a second display object. In addition, FIG. 11 shows an example in which display objects O2 and O3 shown in FIG. 11 are display objects assigned to a local space (a coordinate system transferring along with the direction of the user on which the display device according to this embodiment is mounted), that is, first display objects.

Here, FIG. 11 shows a case in which the axial direction according to this embodiment is a yaw direction as in FIG. 2. A, B, and C shown in FIG. 11 show the motions of the user on which the display device according to this embodiment is mounted in a chronological manner in order of A, B, and C shown in FIG. 11, and show a case in which the movement in a yaw direction is detected due to the rightward turning of a head of the user as in the example shown in FIG. 2. A1, B1, and C1 shown in FIG. 11 show the display surface, and show an example in which icons (an example of the display object) are displayed on the display surface. In addition, A2, B2, and C2 shown in FIG. 11 show a state of the display device according to this embodiment, and A3, B3, and C3 shown in FIG. 11 show a state of the user.

First, A1 of FIG. 11 and B1 shown in FIG. 10 will be referred to. Regarding the display objects O2 and O2 which are first display objects, the display control device according to this embodiment transfers the display objects O2 and O2 to the left (a direction opposite to the axial direction in which the movement of the display device is detected) in FIG. 11 from the position corresponding to the reference position according to this embodiment which is shown in A1 of FIG. 11 as in the example shown in FIG. 11, based on the movement in the yaw direction of the display device according to this embodiment based on the movement of the user as shown in B3 of FIG. 11. At this time, the display control device according to this embodiment does not transfer the display object O1 which is a second display object from the coordinates in the set global space.

Next, B1 of FIG. 11 and C1 shown in FIG. 11 will be referred to. Regarding the display objects O2 and O2 which are first display objects, the display control device according to this embodiment transfers the display objects O2 and O2 transferred from the position corresponding to the reference position according to this embodiment which is shown in A1 of FIG. 10 to the position (position after the transfer) shown in B1 of FIG. 11, from the position (position after the transfer) shown in B1 of FIG. 11 to the position (position corresponding to A1 of FIG. 11) corresponding to the reference position according to this embodiment which is shown in C1 of FIG. 11 as in the example shown in FIG. 2. At this time, the display control device according to this embodiment does not transfer the display object O1 which is a second display object from the coordinates in the set global space.

For example, as shown in FIG. 11, when the display control device according to this embodiment transfers the first display object in accordance with the detected movement and does not transfer the second display object, a user on which the display device according to this embodiment is mounted can feel as if the display object is disposed in a different display layer. Accordingly, for example, as shown in FIG. 11, when the display control device according to this embodiment transfers the first display object in accordance with the detected movement and does not transfer the second display object, the multilayer expression according to this embodiment can be realized.

(6) Sixth example of display control process according to embodiment

The display control process according to this embodiment is not limited to the display control process according to the first example shown in the above-described (1) to the display control process according to the fifth example shown in the above-described (5). For example, the display control device according to this embodiment can also display a display object when a predetermined condition is satisfied. Here, examples of the predetermined condition include occurrence of some event such as reception of new mail (in the case of an icon corresponding to the mail application).

For example, the display control device according to this embodiment displays a display object while changing the transmittance and size of the display object, convergence distance related to parallax, and the like. When the transmittance of the display object is changed, for example, the display control device according to this embodiment displays the display object with a change from a state in which the transmittance is high to a state in which the transmittance is low. When the size of the display object is changed, for example, the display control device according to this embodiment displays the display object with a change from a state in which the size is small to a state in which the size is large. When the convergence distance is changed, for example, the display control device according to this embodiment displays the display object with a change from a state in which the convergence point is adjusted to be distant from the user on which the display device according to this embodiment is mounted to a state in which the convergence point is adjusted to be close to the user.

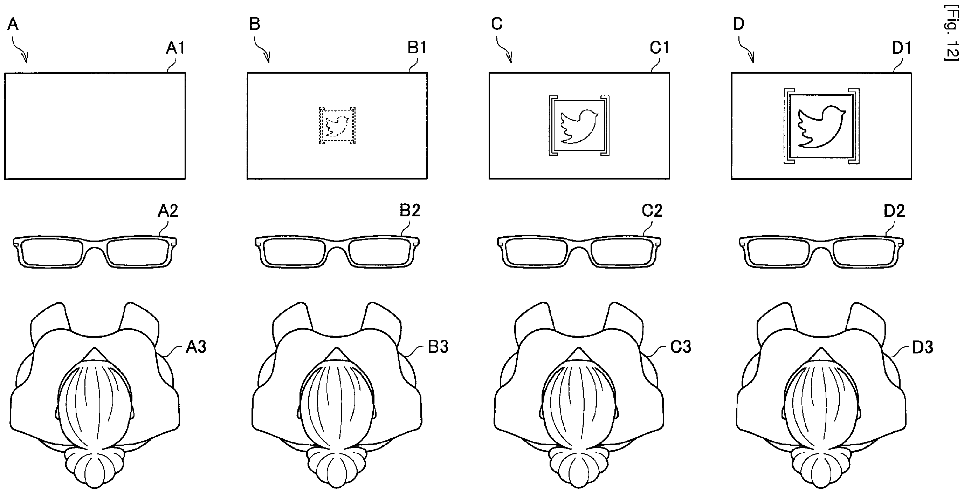

FIG. 12 is an illustrative diagram illustrating a sixth example of the display control process according to this embodiment in the display control device according to this embodiment. A, B, C, and D shown in FIG. 12 show a state of the display surface in a chronological manner in order of A, B, C, and D shown in FIG. 12. A1, B1, C1, and D1 shown in FIG. 12 show the display surface, and show an example in which an icon (an example of the display object) is displayed on the display surface. In addition, A2, B2, C2, and D2 shown in FIG. 12 show a state of the display device according to this embodiment, and A3, B3, C3, and D3 shown in FIG. 12 show a state of the user.

For example, as shown in A1, B1, C1, and D1 of FIG. 12, the display control device according to this embodiment displays an icon while changing the transmittance and size. For example, when an icon is displayed as shown in A1, B1, C1, and D1 of FIG. 12, it is possible to make the user on which the display device according to this embodiment is mounted feel as if the icon wells up on the display surface on which nothing has been displayed when a predetermined condition is satisfied.

(7) Seventh example of display control process according to embodiment: example of process for case in which axial direction according to embodiment is front-back direction of user on which display device according to embodiment is mounted As described above, the axial direction according to this embodiment is not limited to the yaw direction, the pitch direction, and the roll direction, and may include a front-back direction of the user on which the display device according to this embodiment is mounted. When the axial direction according to this embodiment in which the movement is detected is the front-back direction of the user on which the display device according to this embodiment is mounted, the display control device according to this embodiment changes the display size of the display object from the reference size in accordance with the detected movement.

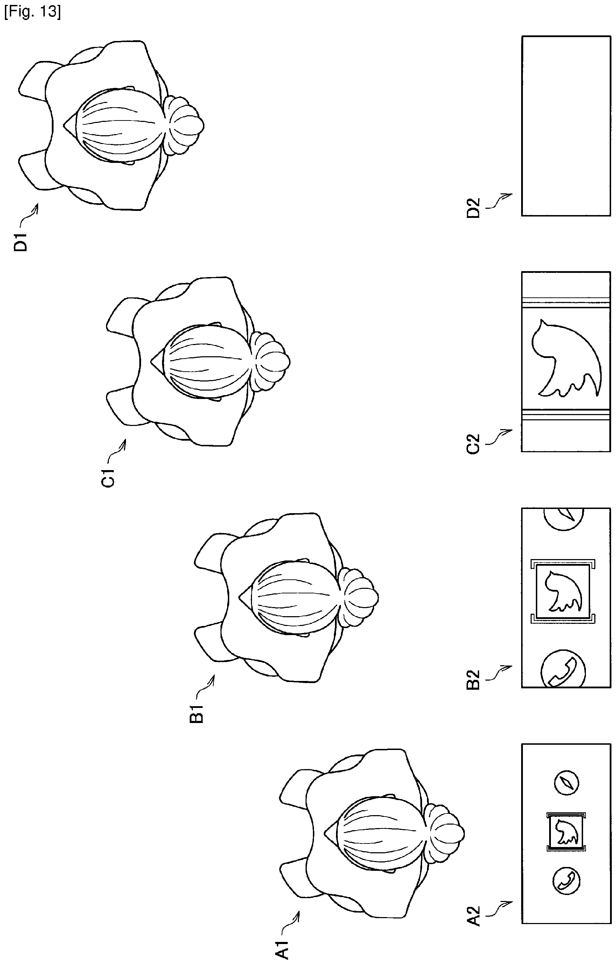

FIG. 13 is an illustrative diagram illustrating a seventh example of the display control process according to this embodiment in the display control device according to this embodiment, and shows an example of a process for the case in which the axial direction according to this embodiment is a front-back direction of a user on which the display device according to this embodiment is mounted. A, B, C, and D shown in FIG. 13 show a motion of the user on which the display device according to this embodiment is mounted in a chronological manner in order of A, B, C, and D shown in FIG. 13, and show a case in which, when the user moves forwards, the movement of the user in the front-back direction is detected. For example, the display control device according to this embodiment detects the movement in the front-back direction of the user on which the display device according to this embodiment is mounted based on detection data acquired from an acceleration sensor (an example of the sensor capable of detecting the movement of the display device according to this embodiment). A1, B1, C1, and D1 shown in FIG. 13 show a state of the user. In addition, A2, B2, C2, and D2 shown in FIG. 13 show the display surface, and show an example in which icons (an example of the display object) are displayed on the display surface. Here, in the example shown in FIG. 13, the display size of the icon shown in A2 of FIG. 13 corresponds to the reference size of the icon.

For example, as shown in A2, B2, C2, and D2 of FIG. 13, when the user on which the display device according to this embodiment is mounted moves forwards, for example, the display control device according to this embodiment makes the display size of the icon larger than the reference size to change the convergence distance. For example, when the icon is displayed as shown in A2, B2, C2, and D2 of FIG. 13, it is possible to make the user on which the display device according to this embodiment is mounted feel as if the icon is approaching.

The expression realized by the display control process according to the seventh example is not limited to the example shown in FIG. 13.

For example, when the display size of the display object is changed, the display control device according to this embodiment may change the changed display size of the display object to the reference size. After the display size of the icon is increased, the display size returns to the original display size (reference size) before the display size was increased when the above-described process is further performed.

(8) Eighth example of display control process according to embodiment

For example, when display objects are disposed to surround a user on which the display device according to this embodiment is mounted, the user may not recognize whether the display object displayed on the display surface is a display object disposed at an end.

Therefore, the display control device according to this embodiment may change an interval between the display objects based on the position at which the display object is disposed and the detected movement of the display device according to this embodiment. The display control device according to this embodiment changes an interval between the display objects when, for example, the position of the display object is a position corresponding to the display object disposed at an end.

Here, the position at which the display object is disposed in the display control process according to the eighth example is represented by, for example, coordinates in a global space (a coordinate system having no changes along with the direction of the user on which the display device according to this embodiment is mounted).

Examples of the method of changing the interval between the display objects include increasing an interval between the display objects in accordance with the detected movement.

For example, as described above, when the display control device according to this embodiment changes the interval between the display objects, the user on which the display device according to this embodiment is mounted can visually recognize that the display object displayed on the display surface is a display object disposed at an end.

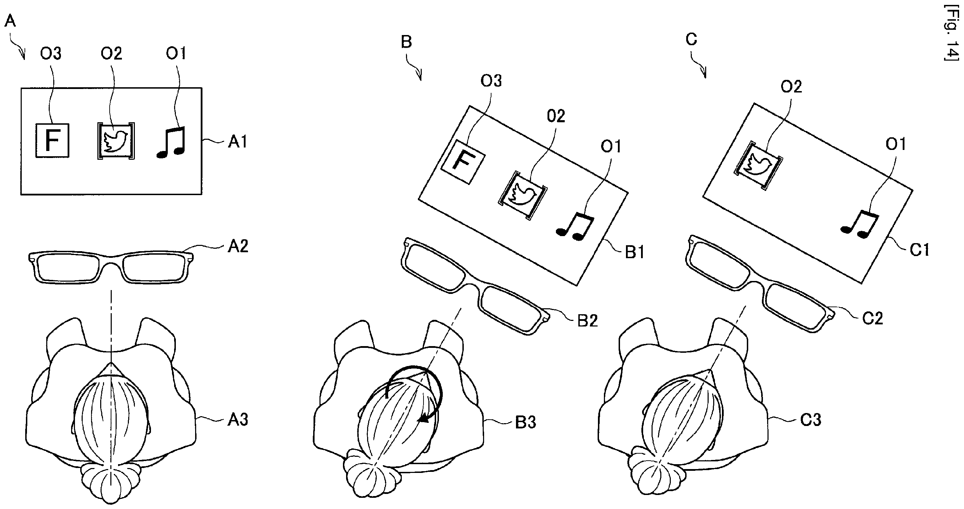

FIG. 14 is an illustrative diagram illustrating the eighth example of the display control process according to this embodiment in the display control device according to this embodiment. FIG. 14 shows an example of the display control process related to the expression in which the interval between the display objects is changed, and shows an example in which the display control device according to this embodiment changes the interval between the display objects when the position of the display object is a position corresponding to the display object disposed at an end. Specifically, FIG. 14 shows an example in which a display object O1 shown in FIG. 14 is a display object disposed at an end.

Here, FIG. 14 shows a case in which the axial direction according to this embodiment is a yaw direction as in FIG. 2. A, B, and C shown in FIG. 14 show a motion of the user on which the display device according to this embodiment is mounted in a chronological manner in order of A, B, and C shown in FIG. 14, and show a case in which the movement in a yaw direction is detected due to the rightward turning of a head of the user as in the example shown in FIG. 2. A1, B1, and C1 shown in FIG. 14 show the display surface, and show an example in which icons (an example of the display object) are displayed on the display surface. In addition, A2, B2, and C2 shown in FIG. 14 show a state of the display device according to this embodiment, and A3, B3, and C3 shown in FIG. 14 show a state of the user.

For example, as shown in A1, B1, and C1 of FIG. 14, the display control device according to this embodiment causes an interval between the display object O1 which is a display object disposed at an end and other display objects O2 and O3 to be displayed larger. For example, as shown in A1, B1, and C1 of FIG. 14, when the display control device according to this embodiment changes the interval between the display objects, the user on which the display device according to this embodiment is mounted can visually recognize that the display object displayed on the display surface is a display object disposed at an end.

(9) Ninth example of display control process according to embodiment

The display control device according to this embodiment does not display a frame around the display surface when a display object is displayed on the display surface. In addition, for example, when there is a display object displayed in an end part of the display surface, the display control device according to this embodiment may further cause a fade-out expression of the display object by changing the transmittance of the end part of the display surface.

For example, as described above, when a frame is not displayed around the display surface or the fade-out expression of the display object is further caused, the display control device according to this embodiment can impart a floating feeling in which the display object floats in the air to a user on which the display device according to this embodiment is mounted.

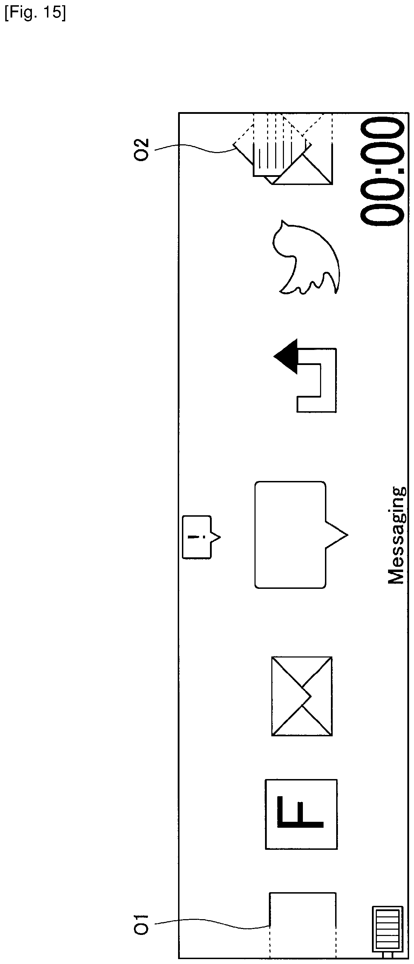

FIG. 15 is an illustrative diagram illustrating a ninth example of the display control process according to this embodiment in the display control device according to this embodiment, and shows an example of the display control process capable of expressing the floating feeling in which the display object floats in the air. FIG. 15 shows examples of display objects which are displayed on the display surface.

For example, as shown in FIG. 15, the display control device according to this embodiment does not display a frame around the display surface. In addition, as shown by display objects O1 and O2 shown in FIG. 15, the display control device according to this embodiment changes the transmittance of the end part of the display surface by increasing the transmittance of the end part of the display surface. For example, when the display control device according to this embodiment displays the display object on the display surface to cause the expression shown in FIG. 15, the display control device according to this embodiment can impart a floating feeling in which the display object floats in the air to a user on which the display device according to this embodiment is mounted.

(10) Tenth example of display control process according to embodiment

The display control process in which the display control device according to this embodiment transfers a display object based on the detected movement of the display device according to this embodiment has been mainly described. However, the display control process in the display control device according to this embodiment is not limited to the process of transferring the display object based on the detected movement.

For example, when the movement of the display device according to this embodiment is not detected for a predetermined time, the display control device according to this embodiment may transfer the display object regardless of the movement of the display device according to this embodiment. Examples of the method of transferring the display object regardless of the movement of the display device according to this embodiment include randomly moving the display object around the reference position by the display control device according to this embodiment. Here, examples of the predetermined time related to the display control process according to the tenth example include a preset fixed time and a variable time which can be set through a user's operation or the like.

For example, when the movement of the display device according to this embodiment is not detected for a predetermined time and the display control device according to this embodiment transfers the display object regardless of the movement of the display device according to this embodiment as described above, the display control device according to this embodiment can realize an expression in which the display object gently moves when a user on which the display device according to this embodiment is mounted performs no operation for a predetermined time. In addition, for example, when transferring the display object regardless of the movement of the display device according to this embodiment as described above, the display control device according to this embodiment can impart, for example, a floating feeling in which the display object floats in the air to a user on which the display device according to this embodiment is mounted.

For example, when transferring the display object regardless of the movement of the display device according to this embodiment as described above, the display control device according to this embodiment may feed the state back to the user by, for example, outputting a sound (including music).

In addition, when transferring the display object regardless of the movement of the display device according to this embodiment as described above, the display control device according to this embodiment moves, for example, each transferring display object to a reference position when the movement of the display device according to this embodiment is detected. In this case, when the display control device according to this embodiment transfers each transferring display object to a reference position, for example, the display control device according to this embodiment can arrange the display objects which move gently.

When transferring the display object regardless of the movement of the display device according to this embodiment as described above, the display control device according to this embodiment may feed the state back to the user by, for example, outputting a sound (including music) when the movement of the display device according to this embodiment is detected.

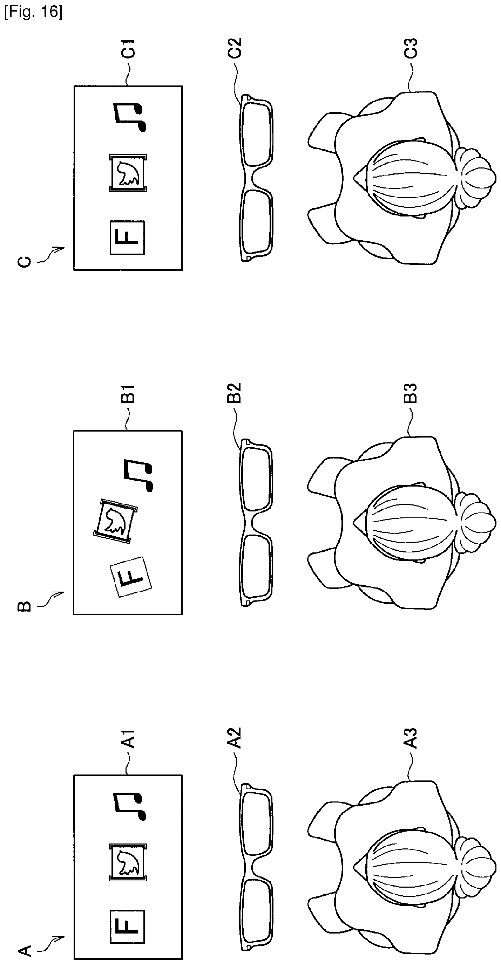

FIG. 16 is an illustrative diagram illustrating the tenth example of the display control process according to this embodiment in the display control device according to this embodiment. FIG. 16 shows an example of the display control process related to the expression in which, when the movement of the display device according to this embodiment is not detected for a predetermined time, the display object is transferred regardless of the movement of the display device according to this embodiment. A, B, and C shown in FIG. 16 show a state of the display surface in a chronological manner in order of A, B, and C shown in FIG. 16. A1, B1, and C1 shown in FIG. 16 show the display surface, and show an example in which icons (an example of the display object) are displayed on the display surface. In addition, A2, B2, and C2 shown in FIG. 16 show a state of the display device according to this embodiment, and A3, B3, and C3 shown in FIG. 16 show a state of the user.

For example, when the display surface has a state in which each icon is displayed at a reference position as shown in A1 of FIG. 16, the display control device according to this embodiment transfers the icon regardless of the movement of the display device according to this embodiment as shown in B1 of FIG. 16 when the movement of the display device according to this embodiment is not detected for a predetermined time. In addition, for example, when the display surface has a state shown in B1 of FIG. 16, the display control device according to this embodiment transfers the transferring icon to the reference position (position corresponding to A1 of FIG. 16) as shown in, for example, C1 of FIG. 16 when the movement of the display device according to this embodiment is detected.

For example, when displaying the icon as shown in B1 of FIG. 16, the display control device according to this embodiment can realize an expression in which the display object gently moves when a user on which the display device according to this embodiment is mounted performs no operation for a predetermined time. In addition, for example, when displaying the icon as shown in B1 of FIG. 16, the display control device according to this embodiment can impart, for example, a floating feeling in which the display object floats in the air to the user on which the display device according to this embodiment is mounted.

In addition, for example, the display control device according to this embodiment can arrange the display objects which move gently when, for example, transferring the icon transferred as shown in B1 of FIG. 16 to the reference position as shown in C1 of FIG. 16.

(11) Eleventh example of display control process according to embodiment

The display control device according to this embodiment can also perform two or more of the display control process according to the first example shown in the above-described (1) to the display control process according to the tenth example shown in the above-described (10) in parallel. That is, for example, the display control device according to this embodiment can combine two or more of the display control process according to the first example shown in the above-described (1) to the display control process according to the tenth example shown in the above-described (10).

(Display control apparatus according to embodiment)

Next, an example of the configuration of the display control apparatus according to the present embodiment capable of performing the process relevant to the display control method according to the present embodiment described above will be described.

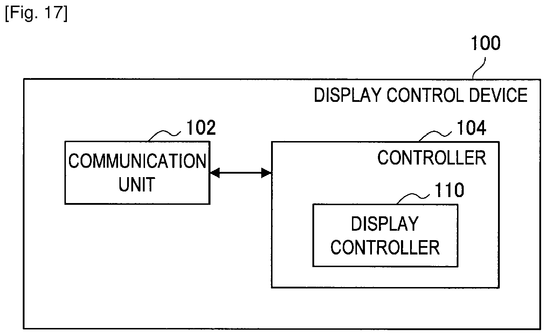

FIG. 17 is a block diagram illustrating an example of the configuration of a display control apparatus 100 according to the present embodiment. The display control apparatus 100 includes, for example, a communication unit 102 and a control unit 104.

The display control apparatus 100 may include, for example, a read-only memory (ROM; not illustrated), a random access memory (RAM; not illustrated), a storage unit (not illustrated), an operation unit (not illustrated) operable by a user, and a display unit (not illustrated) that displays various screens as a display screen. In the display control apparatus 100, for example, the foregoing constituent elements are connected via a bus serving as a data transmission path.

Here, the ROM (not illustrated) stores a program used by the control unit 104 or control data such as a calculation parameter. The RAM (not illustrated) temporarily stores a program or the like executed by the control unit 104.

The storage unit (not illustrated) is a storage unit included in the display control apparatus 100 and stores, for example, data indicating display objects and various kinds of data such as applications. Here, a magnetic recording medium such as a hard disk or a non-volatile memory such as an electrically erasable and programmable read-only memory (EEPROM) or a flash memory can be exemplified as the storage unit (not illustrated). The storage unit (not illustrated) may be detachably mounted on the display control apparatus 100.

An example of the operation unit (not shown) may be a later-described operation input device, for example, and an example of the display unit (not shown) may be a later-described display device, for example.

<Example of hardware configuration of display control apparatus 100>

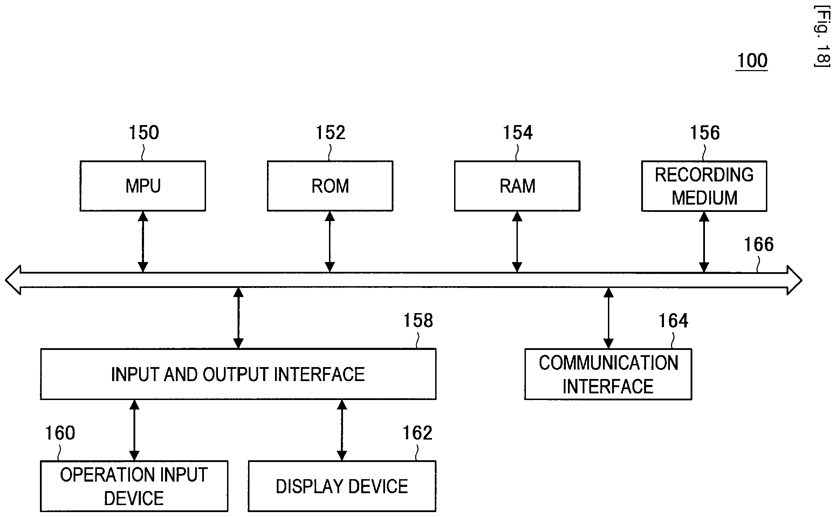

FIG. 18 is an explanatory diagram illustrating an example of a hardware configuration of the display control apparatus 100 according to the present embodiment. The display control apparatus 100 includes, for example, an MPU 150, a ROM 152, a RAM 154, a recording medium 156, an input and output interface 158, an operation input device 160, a display device 162, and a communication interface 164. In the display control apparatus 100, for example, the constituent elements are connected via a bus 166 serving as a data transmission path.

The MPU 150 is formed by, for example, an MPU or a various processing circuits and functions as the control unit 104 that controls the entire display control apparatus 100. For example, the MPU 150 serves as a display control unit 110 to be described below in the display control apparatus 100.

The ROM 152 stores a program used by the MPU 150, control data such as a calculation parameter, or the like. For example, the RAM 154 temporarily stores a program or the like executed by the MPU 150.

The recording medium 156 functions as a storage unit (not illustrated) and, for example, stores data indicating display objects or various data such as applications. Here, a magnetic recording medium such as a hard disk or a non-volatile memory such as a flash memory can be exemplified as the recording medium 156. Further, the recording medium 156 may be detachably mounted on the display control apparatus 100.

For example, the input and output interface 158 connects the operation input device 160 to the display device 162. The operation input device 160 functions as an operation unit (not illustrated) and the display device 162 functions as a display unit (not illustrated). Here, a Universal Serial Bus (USB) terminal, a Digital Visual Interface (DVI) terminal, a High-Definition Multimedia Interface (HDMI) terminal, and various processing circuits can be exemplified as the input and output interface 158. For example, the operation input device 160 can be provided on the display control apparatus 100 and is connected to the input and output interface 158 inside the display control apparatus 100. A button, a direction key, a rotation type selector such as a jog dial, or a combination thereof can be exemplified as the operation input device 160. For example, the display device 162 is provided on the display control apparatus 100 and is connected to the input and output interface 158 inside the display control apparatus 100. A liquid crystal display (LCD) or an organic electro-luminescence (EL) display (or called an organic light emitting diode (OLED) display) can be exemplified as the display device 162.

The input and output interface 158 is, of course, connected to an operation input device (for example, a keyboard or a mouse) which is an external device of the display control apparatus 100 or an external device such as a display device. For example, the display device 162 may be a device such as a touch screen in which a display process and a user's operation can be performed.

The communication interface 164 is a communication unit included in the display control apparatus 100 and functions as the communication unit 102 that performs wireless/wired communication with an external apparatus such as a display apparatus according to the present embodiment via a network (or directly). Here, a communication antenna, an RF circuit (wireless communication), an IEEE 802.15.1 port and a transmission and reception circuit (wireless communication), an IEEE 802.11b port and a transmission and reception circuit (wireless communication), or a LAN terminal and a transmission and reception circuit (wired communication) can be exemplified as the communication interface 164. A wired network such as a LAN or a wide area network (WAN), a wireless network such as a wireless local area network (WLAN) or a wireless wide area network (WWAN) via a base station, or the Internet using a communication protocol such as the transmission control protocol/internet protocol (TCP/IP) can be exemplified as the network according to the present embodiment.

The display control apparatus 100 has, for example, the configuration illustrated in FIG. 18 to perform a process relevant to the display control method according to the present embodiment. The hardware configuration of the display control apparatus 100 according to the present embodiment is not limited to the configuration illustrated in FIG. 18.

For example, the display control apparatus 100 may include a plurality of communication interfaces for which communication schemes differ or communication schemes are the same.

For example, when communication is performed with an external apparatus such as the display apparatus according to the present embodiment via an external communication device connected via the input and output interface 158 or the like, the display control apparatus 100 may not include the communication interface 164.

For example, when the display control apparatus 100 is configured to perform a process as a stand-alone apparatus (for example, when the display control apparatus 100 and the display apparatus according to the present embodiment are an integrated apparatus), the display control apparatus 100 may not include the communication interface 164.

The display control apparatus 100 may have a configuration in which the operation input device 160 or the display device 162 is not included.

Referring back to FIG. 17, an example of the configuration of the display control apparatus 100 will be described. The communication unit 102 is a communication unit included in the display control apparatus 100 and performs wireless/wired communication with an external apparatus such as the display apparatus according to the present embodiment via a network (or directly). The communication of the communication unit 102 is controlled by, for example, the control unit 104.

Here, a communication antenna and an RF circuit or a LAN terminal and a transmission and reception circuit can be exemplified as the communication unit 102, but the configuration of the communication unit 102 is not limited to the foregoing configuration. For example, the communication unit 102 may have a configuration of a USB terminal and a transmission and reception circuit, which corresponds to any standard capable of performing communication or any configuration capable of performing communication with an external apparatus via a network.

The control unit 104 includes, for example, an MPU and serves to control the entire display control apparatus 100. The control unit 104 includes, for example, the display control unit 110 and serves to initiatively perform the process relevant to the display control method according to the present embodiment.

The display controller 110 serves to perform the display control process according to this embodiment in a leading manner and controls the display of a display object which is displayed on the display surface in the display device according to this embodiment (a display device which is mounted on a user so that a display surface is positioned ahead of the user). For example, the display controller 110 transfers and displays a display object which is displayed on the display surface from a reference position corresponding to the display object in accordance with the movement of the display device, and transfers and displays the transferred display object from the position after the transfer to the reference position.

In greater detail, for example, the display controller 110 performs any of the display control process according to the first example shown in the above-described (1) to the display control process according to the eleventh example shown in the above-described (11).

Here, when the display control device 100 and the display device according to this embodiment are separate devices, for example, the display controller 110 communicates with the display device according to this embodiment through the communication unit 102 (or an external communication device connected thereto; the same applies hereinafter) to perform the display control process according to this embodiment. In this case, for example, the display controller 110 transmits a display control signal corresponding to the result of the process (for example, a signal including data showing the display object, data showing the position at which the display object is to be positioned, a display control instruction, and the like) to the display device according to this embodiment through the communication unit 102 to control the display of a display object in the display device according to this embodiment.

When the display control device 100 and the display device according to this embodiment are formed integrally with each other, for example, the display controller 110 performs the display control process according to this embodiment to send a display control signal corresponding to the result of the process to a display unit (not shown) of the display control device 100, thereby controlling the display of a display object in the display device according to this embodiment.

The control unit 104 includes, for example, the display control unit 110 to initiatively perform the process relevant to the display control method according to the present embodiment.

For example, the display control device 100 performs a process (for example, the above-described display control process) according to the display control method according to this embodiment with the configuration shown in FIG. 17. Accordingly, for example, the display control device 100 can decrease the possibility of giving a user a feeling of discomfort with the configuration shown in FIG. 17. In addition, the display control device 100 can exhibit the effects of the display control process according to the first example shown in the above-described (1) to the display control process according to the eleventh example shown in the above-described (11) with the configuration shown in FIG. 17.

The configuration of the display control device according to this embodiment is not limited to the configuration shown in FIG. 17.

For example, the display control device according to this embodiment may be selectively provided with the display controller 110 (for example, the display controller 110 is realized with a processing circuit formed separately from the controller 104) shown in FIG. 17.

In addition, for example, the display control device according to this embodiment may not be provided with the communication unit 102 when the display control device is configured to perform the process in a stand-alone manner (for example, when the display control device and the display device according to this embodiment are formed integrally with each other) or communicates with an external device such as the display device according to this embodiment through an external communication device connected thereto.

As described above, for example, the display control device according to this embodiment performs the above-described display control process as a process according to the display control method according to this embodiment. Here, the display control device according to this embodiment moves a display object based on the detected movement of the display device according to this embodiment. Accordingly, when the display control device according to this embodiment performs the display control process according to this embodiment, the possibility of giving a user a feeling of discomfort which is caused since the user's field of view is blocked, as in the case in which a display object is displayed constantly at a fixed position on the display surface is decreased.

Accordingly, the display control device according to this embodiment can decrease the possibility of giving a user a feeling of discomfort.

In addition, when the display control device according to this embodiment performs, as a process according to the display control method according to this embodiment, any of the display control process according to the first example shown in the above-described (1) to the display control process according to the eleventh example shown in the above-described (11), the display control device can exhibit the effects of the respective display control processes.

Furthermore, for example, when the display control device according to this embodiment performs any of the display control process according to the first example shown in the above-described (1) to the display control process according to the eleventh example shown in the above-described (11) as a process according to the display control method according to this embodiment, for example, the display control device according to this embodiment can change the movement of a display object in accordance with the movement of the display device according to this embodiment which is detected based on the movement of a user on which the display device according to this embodiment is mounted. Accordingly, the display control device according to this embodiment can make the user on which the display device according to this embodiment is mounted feel as if the display object floats in or adheres to a space.

Accordingly, the display control device according to this embodiment can decrease the possibility of giving a user a feeling of discomfort and provide a comfortable graphical user interface (GUI) to the user.

The display apparatus according to the present embodiment has been described as an example, but the embodiment is not limited thereto. The embodiment can be applied to, for example, "an apparatus that has any shape and a configuration in which a display surface is located in front of a user" such as an HMD or an eyeglass (monocle) type apparatus.

The display control apparatus according to the present embodiment has been described as an example, but the embodiment is not limited thereto. The embodiment can be applied to, for example, various apparatuses such as communication apparatuses such as mobile phones or smartphones, video/music reproduction apparatuses (or video/music recording reproduction devices), game devices, or a computer such as a PC (personal computer) or a server. Further, the embodiment can be applied to, for example, the display apparatus according to the present embodiment. Furthermore, the embodiment can also be applied to, for example, a processing integrated circuit (IC) which can be embedded into the foregoing apparatus or the display apparatus according to the present embodiment.

(Program according to embodiment)

When a computer executes a program (for example, a program capable of performing the process relevant to the display control method according to the present embodiment, such as the display control process according to the present embodiment) causing a computer to function as the display control apparatus according to the present embodiment, the possibility of giving a user a feeling of discomfort can be reduced.

In addition, the effects of the display control process according to the first example shown in the above-described (1) to the display control process according to the eleventh example shown in the above-described (11) can be exhibited by executing a program (for example, a program capable of performing any of the display control process according to the first example shown in the above-described (1) to the display control process according to the eleventh example shown in the above-described (11)) for causing the computer to function as the display control device according to this embodiment in the computer.

The preferred embodiments of the present disclosure have been described in detail with reference to the appended drawings, but the technical scope of the present disclosure is not limited to the embodiments. It should be understood by those skilled in the art that various modifications and alterations may occur depending on design requirements and other factors insofar as they are within the technical scope of the appended claims or the equivalents thereof, and the modifications and the alterations are construed to pertain to the technical scope of the present disclosure.

For example, the case in which the program (computer program) causing a computer to function as the display control device according to the present embodiment is provided has been described, but the embodiment can also provide a recording medium storing the program.

Reference Signs List

| 10 | display unit |
|---|---|
| 12 | temple member |
| 14 | bridge member |
| 16 | modern member |
| 18 | pad member |
| 100 | display control device |
| 102 | communication unit |
| 104 | controller |
| 110 | display controller |

Claims

1.  A display control device (100) comprising:

    a display control unit (110) configured to move a displayed object on a screen of a display device (162) of a head-mounted display in a direction opposite to the direction of movement of the display device (162) of the head-mounted display,
    wherein the displayed object is moved to a predetermined position on the screen without any user input after the displayed object has been moved from the predetermined position on the basis of turning of a head of a user,
    wherein the predetermined position is a position set in a local space,
    wherein the local space is a coordinate system transferring along with a direction of the head-mounted display.

2.  The display control device (100) according to claim 1, wherein the displayed object is moved within the screen in a direction opposite to the direction of movement of the display device (162) while the display device (162) is moving, and
    the displayed object is moved to the predetermined position after the movement of the display device (162) has stopped.

3.  The display control device (100) according to claim 1, wherein a manner in which the displayed object moves is determined according to at least an amount of movement of the display device (162).

4.  The display control device (100) according to claim 1, further comprising a plurality of displayed objects on the screen of the display device (162),
    wherein a manner in which the plurality of displayed objects move is determined according to at least one characteristic of each displayed object such that at least two of the plurality of displayed objects have different characteristics that cause the at least two displayed objects with different characteristics to move in different manners at the same time.

5.  The display control device (100) according to claim 3, wherein the manner is a speed of movement of the displayed object.

6.  The display control device (100) according to claim 1, wherein the displayed object is not moved to the predetermined position when the movement of the display device (162) is in a roll direction.

**7.** The display control device (100) according to claim 1, wherein the displayed object includes:

a first object that is permitted to move in a direction opposite to the direction of movement of the display device (162); and
a second object that is not permitted to move in a direction opposite to the direction of movement of the display device (162).

**8.** The display control device (100) according to claim 7, wherein the second object serves as a marker for object recognition.

**9.** The display control device (100) according to claim 1, wherein the displayed object changes size according to movement of the display device (162) when a predetermined condition is satisfied.

**10.** The display control device according (100) to claim 1, wherein the displayed object is displayed and moved such that the displayed object remains parallel to the ground.

**11.** The display control device (100) according to claim 1, wherein a manner of the displayed object is changed according to a calculated convergence distance, wherein the manner is a speed of movement of the displayed object or a size of the displayed object.

**12.** The display control device (100) according to claim 1, wherein the displayed object is capable of moving in at least two axial directions selected from the group consisting of: a yaw direction, a pitch direction, and a roll direction.

**13.** A method comprising:

moving a displayed object on a screen of a display device (162) of a head-mounted display in a direction opposite to the direction of movement of the display device (162) of the head-mounted display,
wherein the displayed object is moved to a predetermined position on the screen without any user input after the displayed object has been moved from the predetermined position on the basis of turning of a head of a user,
wherein the predetermined position is a position set in a local space,
wherein the local space is a coordinate system transferring along with a direction of the head-mounted display .

**14.** A computer program comprising instructions which cause a processor to:

move a displayed object on a screen of a display device (162) of a head-mounted display in a direction opposite to the direction of movement of the display device (162) of the head-mounted display,
wherein the displayed object is moved to a predetermined position on the screen without any user input after the displayed object has been moved from the predetermined position on the basis of turning of a head of a user,
wherein the predetermined position is a position set in a local space,
wherein the local space is a coordinate system transferring along with a direction of the head-mounted display.

**Patentansprüche**

**1.** Anzeigesteuerungsvorrichtung (100), umfassend:

eine Anzeigensteuerungseinheit (110), die dazu ausgelegt ist, ein angezeigtes Objekt auf einem Bildschirm einer Anzeigevorrichtung (162) einer kopfmontierten Anzeige in einer Richtung entgegengesetzt zu der Bewegungsrichtung der Anzeigevorrichtung (162) der kopfmontierten Anzeige zu bewegen,
wobei das angezeigte Objekt zu einer vorbestimmten Position auf dem Bildschirm ohne jegliche Benutzereingabe bewegt wird, nachdem das angezeigte Objekt aus der vorbestimmten Position auf der Grundlage der Drehung eines Kopfes eines Benutzers bewegt wird,
wobei die vorbestimmte Position eine in einem lokalen Raum festgelegte Position ist,
wobei der lokale Raum ein Koordinatensystem ist, das zusammen mit einer Richtung der kopfmontierten Anzeige übertragen wird.

**2.** Anzeigesteuerungsvorrichtung (100) nach Anspruch 1, wobei das angezeigte Objekt innerhalb des Bildschirms in einer Richtung entgegengesetzt zur Bewegungsrichtung der Anzeigevorrichtung (162) bewegt wird, während sich die Anzeigevorrichtung (162) bewegt, und
das angezeigte Objekt nach dem Anhalten der Bewegung der Anzeigevorrichtung (162) an die vorbestimmte Position bewegt wird.

**3.** Anzeigesteuerungsvorrichtung (100) nach Anspruch 1, wobei eine Art und Weise, in der sich das angezeigte Objekt bewegt, in Abhängigkeit von mindestens einem Bewegungsbetrag der Anzeigevorrichtung (162) bestimmt wird.

**4.** Anzeigensteuerungsvorrichtung (100) nach Anspruch 1, ferner umfassend mehrere angezeigte Objekte auf dem Bildschirm der Anzeigevorrichtung (162),

wobei eine Art und Weise, in der sich die mehreren angezeigten Objekte bewegen, gemäß mindestens einer Eigenschaft jedes angezeigten Objekts bestimmt wird, so dass mindestens zwei der mehreren angezeigten Objekte unterschiedliche Eigenschaften haben, die die mindestens zwei angezeigten Objekte mit unterschiedlichen Eigenschaften veranlassen, sich auf unterschiedliche Art und Weise gleichzeitig zu bewegen.

5. Anzeigesteuerungsvorrichtung (100) nach Anspruch 3, wobei die Art und Weise eine Geschwindigkeit der Bewegung des angezeigten Objekts ist.

6. Anzeigesteuerungsvorrichtung (100) nach Anspruch 1, wobei das angezeigte Objekt nicht in die vorbestimmte Position bewegt wird, wenn die Bewegung der Anzeigevorrichtung (162) in einer Rollrichtung erfolgt.

7. Anzeigesteuerungsvorrichtung (100) nach Anspruch 1, wobei das angezeigte Objekt enthält:

ein erstes Objekt, das erlaubt ist, sich in eine Richtung entgegengesetzt zur Bewegungsrichtung der Anzeigevorrichtung (162) zu bewegen; und

ein zweites Objekt, das nicht erlaubt ist, sich in eine Richtung entgegengesetzt zur Bewegungsrichtung der Anzeigevorrichtung (162) zu bewegen.

8. Anzeigesteuerungsvorrichtung (100) nach Anspruch 7, wobei das zweite Objekt als Markierung zur Objekterkennung dient.

9. Anzeigesteuerungsvorrichtung (100) nach Anspruch 1, wobei das angezeigte Objekt seine Größe entsprechend der Bewegung der Anzeigevorrichtung (162) ändert, wenn eine vorbestimmte Bedingung erfüllt ist.

10. Anzeigesteuerungsvorrichtung (100) nach Anspruch 1, wobei das angezeigte Objekt so angezeigt und bewegt wird, dass das angezeigte Objekt parallel zum Boden bleibt.

11. Anzeigesteuerungsvorrichtung (100) nach Anspruch 1, wobei eine Art und Weise des angezeigten Objekts entsprechend einer berechneten Konvergenzdistanz geändert wird, wobei die Art und Weise eine Geschwindigkeit der Bewegung des angezeigten Objekts oder eine Größe des angezeigten Objekts ist.

12. Anzeigensteuerungsvorrichtung (100) nach Anspruch 1, wobei das angezeigte Objekt in der Lage ist, sich in mindestens zwei axialen Richtungen zu bewegen, die aus der Gruppe bestehend aus einer Gierrichtung, einer Nickrichtung und einer Rollrichtung ausgewählt sind.

13. Verfahren, umfassend:

Bewegen eines angezeigten Objekts auf einem Bildschirm einer Anzeigevorrichtung (162) einer kopfmontierten Anzeige in einer Richtung entgegengesetzt zur Bewegungsrichtung der Anzeigevorrichtung (162) der kopfmontierten Anzeige,

wobei das angezeigte Objekt zu einer vorbestimmten Position auf dem Bildschirm ohne jegliche Benutzereingabe bewegt wird, nachdem das angezeigte Objekt aus der vorbestimmten Position auf der Grundlage der Drehung eines Kopfes eines Benutzers bewegt wird,

wobei die vorbestimmte Position eine in einem lokalen Raum festgelegte Position ist,

wobei der lokale Raum ein Koordinatensystem ist, das zusammen mit einer Richtung der kopfmontierten Anzeige übertragen wird.

14. Computerprogramm umfassend Anweisungen, die einen Prozessor dazu veranlassen:

ein angezeigtes Objekt auf einem Bildschirm einer Anzeigevorrichtung (162) einer kopfmontierten Anzeige in einer Richtung entgegengesetzt zur Bewegungsrichtung der Anzeigevorrichtung (162) der kopfmontierten Anzeige bewegen,

wobei das angezeigte Objekt zu einer vorbestimmten Position auf dem Bildschirm ohne jegliche Benutzereingabe bewegt wird, nachdem das angezeigte Objekt aus der vorbestimmten Position auf der Grundlage der Drehung eines Kopfes eines Benutzers bewegt wird,

wobei die vorbestimmte Position eine in einem lokalen Raum festgelegte Position ist,

wobei der lokale Raum ein Koordinatensystem ist, das zusammen mit einer Richtung der kopfmontierten Anzeige übertragen wird.

**Revendications**

1. Dispositif de commande d'affichage (100) comprenant :

une unité de commande d'affichage (110) configurée pour déplacer un objet affiché sur un écran d'un dispositif d'affichage (162) d'un visiocasque dans une direction opposée à la direction de mouvement du dispositif d'affichage (162) du visiocasque,

dans lequel l'objet affiché est déplacé jusqu'à une position prédéterminée sur l'écran sans aucune saisie par l'utilisateur après que l'objet affiché a été déplacé depuis la position prédéterminée sur la base du fait qu'un utilisateur a tourné la tête,

dans lequel la position prédéterminée est une position établie dans un espace local,

dans lequel l'espace local est un système de coordonnées dont le transfert se fait en conjonction avec une direction du visiocasque.

2. Dispositif de commande d'affichage (100) selon la revendication 1, dans lequel l'objet affiché est déplacé au sein de l'écran dans une direction opposée à la direction de mouvement du dispositif d'affichage (162) pendant que le dispositif d'affichage (162) se déplace, et

l'objet affiché est déplacé jusqu'à la position prédéterminée après que le mouvement du dispositif d'affichage (162) s'est arrêté.

3. Dispositif de commande d'affichage (100) selon la revendication 1, dans lequel une manière suivant laquelle l'objet affiché se déplace est déterminée en fonction d'au moins une ampleur de mouvement du dispositif d'affichage (162).

4. Dispositif de commande d'affichage (100) selon la revendication 1, comprenant en outre une pluralité d'objets affichés sur l'écran du dispositif d'affichage (162),

dans lequel une manière suivant laquelle la pluralité d'objets affichés se déplace est déterminée en fonction d'au moins une caractéristique de chaque objet affiché de telle sorte qu'au moins deux objets de la pluralité d'objets affichés aient des caractéristiques différentes qui obligent lesdits au moins deux objets affichés avec des caractéristiques différentes à se déplacer suivant des manières différentes au même moment.

5. Dispositif de commande d'affichage (100) selon la revendication 3, dans lequel la manière est une vitesse de mouvement de l'objet affiché.

6. Dispositif de commande d'affichage (100) selon la revendication 1, dans lequel l'objet affiché n'est pas déplacé jusqu'à la position prédéterminée lorsque le mouvement du dispositif d'affichage (162) se fait suivant une direction de roulis.

7. Dispositif de commande d'affichage (100) selon la revendication 1, dans lequel l'objet affiché inclut :

un premier objet qui est autorisé à se déplacer dans une direction opposée à la direction de mouvement du dispositif d'affichage (162) ; et un deuxième objet qui n'est pas autorisé à se déplacer dans une direction opposée à la direction de mouvement du dispositif d'affichage (162).

8. Dispositif de commande d'affichage (100) selon la revendication 7, dans lequel le deuxième objet sert de marqueur pour une reconnaissance d'objet.

9. Dispositif de commande d'affichage (100) selon la revendication 1, dans lequel l'objet affiché change de taille en fonction d'un mouvement du dispositif d'affichage (162) lorsqu'une condition prédéterminée est satisfaite.

10. Dispositif de commande d'affichage (100) selon la revendication 1, dans lequel l'objet affiché est affiché et déplacé de telle sorte que l'objet affiché reste parallèle au sol.

11. Dispositif de commande d'affichage (100) selon la revendication 1, dans lequel une manière de l'objet affiché est changée en fonction d'une distance de convergence calculée, la manière étant une vitesse de mouvement de l'objet affiché ou une taille de l'objet affiché.

12. Dispositif de commande d'affichage (100) selon la revendication 1, dans lequel l'objet affiché est apte à se déplacer dans au moins deux directions axiales sélectionnées parmi le groupe consistant en : une direction d'embardée, une direction de tangage, et une direction de roulis.

13. Procédé comprenant :

le déplacement d'un objet affiché sur un écran d'un dispositif d'affichage (162) d'un visiocasque dans une direction opposée à la direction de mouvement du dispositif d'affichage (162) du visiocasque,

dans lequel l'objet affiché est déplacé jusqu'à une position prédéterminée sur l'écran sans aucune saisie par l'utilisateur après que l'objet affiché a été déplacé depuis la position prédéterminée sur la base du fait qu'un utilisateur a tourné la tête,

dans lequel la position prédéterminée est une position établie dans un espace local,

dans lequel l'espace local est un système de coordonnées dont le transfert se fait en conjonction avec une direction du visiocasque.

14. Programme informatique comprenant des instructions qui obligent un processeur à :

déplacer un objet affiché sur un écran d'un dispositif d'affichage (162) d'un visiocasque dans une direction opposée à la direction de mouvement du dispositif d'affichage (162) du visiocasque,

dans lequel l'objet affiché est déplacé jusqu'à une position prédéterminée sur l'écran sans aucune saisie par l'utilisateur après que l'objet affiché a été déplacé depuis la position prédéterminée sur la base du fait qu'un utilisateur a tourné la tête,

dans lequel la position prédéterminée est une position établie dans un espace local,

dans lequel l'espace local est un système de coordonnées dont le transfert se fait en conjonction avec une direction du visiocasque.

[Fig. 1]

A

14 18
16
12
10

B

10
12

[Fig. 2]

[Fig. 3]

EP 2 979 151 B1

A

$\theta_0$

$\theta_1$

$\Delta\theta$

$\Delta\theta = \theta_1 - \theta_0$

+ ROTATION

B

X-AXIS

Y-AXIS

REFERENCE
POSITION

[Fig. 4]

EP 2 979 151 B1

```
                    START

         S100
    IS |Δθ| EQUAL TO          NO
  OR HIGHER THAN THRESHOLD ─────────────────────────┐
        VALUE?                                       │
         │                                           │
         YES                                         ▼
         │                              S108
         ▼         S102                IS DISPLAY OBJECT      NO        S110
    IS VALUE OF         NO           POSITIONED AT REFERENCE ──────► MOVE DISPLAY OBJECT
  Δθ NEGATIVE VALUE? ───────┐          POSITION?                     TOWARD REFERENCE
         │                  │              │                            POSITION
         YES                │              YES
         │                  │              │
         ▼    S104          ▼   S106       │
  MOVE DISPLAY OBJECT IN  MOVE DISPLAY OBJECT IN
  DIRECTION OF X>0        DIRECTION OF X<0
         │                  │              │
         └──────────────────┴──────────────┘
                    │
                    ▼
                   END
```

[Fig. 5]

[Fig. 6]

[Fig. 7]

[Fig. 8]

[Fig. 9]

[Fig. 10]

[Fig. 11]

[Fig. 12]

EP 2 979 151 B1

[Fig. 13]

[Fig. 14]

[Fig. 15]

O2

O1

Messaging

00:00

F

[Fig. 16]

EP 2 979 151 B1

[Fig. 17]

100

DISPLAY CONTROL DEVICE

102
COMMUNICATION
UNIT

104
CONTROLLER

110
DISPLAY
CONTROLLER

[Fig. 18]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013071908 A
- JP 2011249906 A

- US 20120005624 A1